# EUROPEAN PATENT APPLICATION

(11) **EP 4 513 410 A1**
(43) Date of publication of application: **26.02.2025**
(21) Application number: 24804720.1
(22) Date of filing: 08.05.2024
(51) Int. Cl.: G06Q 20/34

(54) **PAYMENT METHOD AND TERMINAL**

(30) Priority: 26.05.2023 CN 202310606908
(71) Applicant: Huawei Technologies Co., Ltd., Shenzhen, Guangdong 518129 (CN)
(72) Inventor: SHENG, Qiang, Shenzhen, Guangdong 518129 (CN)
(74) Representative: Grünecker Patent- und Rechtsanwälte PartG mbB
(86) International application number: PCT/CN2024/091550
(87) International publication number: WO 2024/244921

(57) **Abstract**

This application relates to the field of terminal technologies, and provides an NFC payment method and a terminal, to resolve a conventional-technology problem of a complex operation of switching a default payment application when NFC payment is used. The NFC payment method includes: after one of a plurality of NFC payment applications is selected as a first payment application, namely, a system-default payment application for NFC payment, and a remaining payment application is selected as a second payment application, namely, a non-system-default payment application for NFC payment, issuing, by the second payment application, a second payment card; obtaining, by the first payment application, a second payment card snapshot of the second payment application; displaying the second payment card of the second payment application in an NFC payment interface of the first payment application in response to an operation of opening the NFC payment interface by a user; displaying, by the first payment application, a payment interface of the second payment application based on the second payment card snapshot of the second payment application in response to an operation of selecting the second payment card of the second payment application by the user; and interacting, by the second payment application, with a second terminal to complete payment. The user may select the second payment card in the first payment application to complete payment.

## Description

### TECHNICAL FIELD

This application relates to the field of terminal technologies, and in particular, to a payment method and a terminal.

### BACKGROUND

With rapid development of mobile payment, NFC (Near Field Communication, near field communication) is being used more widely in the payment field. NFC payment is widely used in payment applications such as bank cards and transportation cards.

The payment application, such as Huawei Wallet, Apple Pay (Apple Pay)^{®}, Samsung Pay (Samsung Pay)^{®}, or Mi Pay (Mi Pay)^{®}, is a payment application that is developed by a terminal manufacturer in cooperation with organizations such as a card organization and a card issuer and that is based on a secure element (Secure Element, SE) and NFC in a terminal. The payment application allows a user to bind a physical bank card such as a credit card or a debit card owned by the user to the terminal, to form a virtual bank card. The card organization may be China UnionPay, or the like, and the card issuer may be a state-owned bank, such as Bank of China, and a commercial bank, such as China Merchants Bank. After the physical bank card is bound to the terminal to form the virtual bank card, the terminal can be brought close to a card reader of an NFC point of sale (Point of Sale, POS) terminal, and this action is also referred to as "tap (tap)". In this way, payment through card tapping, which is referred to as "QuickPass" by UnionPay, can be completed. It should be noted that virtual bank card data including a payment token (Token), a payment key, and the like are stored in the SE, and the SE has a secure storage capability not weaker than that of the physical bank card, and is a reliable carrier of the virtual bank card. The virtual bank card generated by binding the physical bank card to the terminal is also referred to as a payment card.

In addition, a third-party payment application such as Alipay^{®}, WeChat^{®}, or Nanjing Transportation^{®} also supports NFC payment.

In the conventional technology, each payment application on the terminal may interact with a POS terminal or a turnstile by using an NFC payment capability, to achieve a corresponding transaction purpose. When the user faces different payment scenarios and wants to change a payment application, a payment application expected by the user can be set as a default payment application for an NFC function of the terminal device.

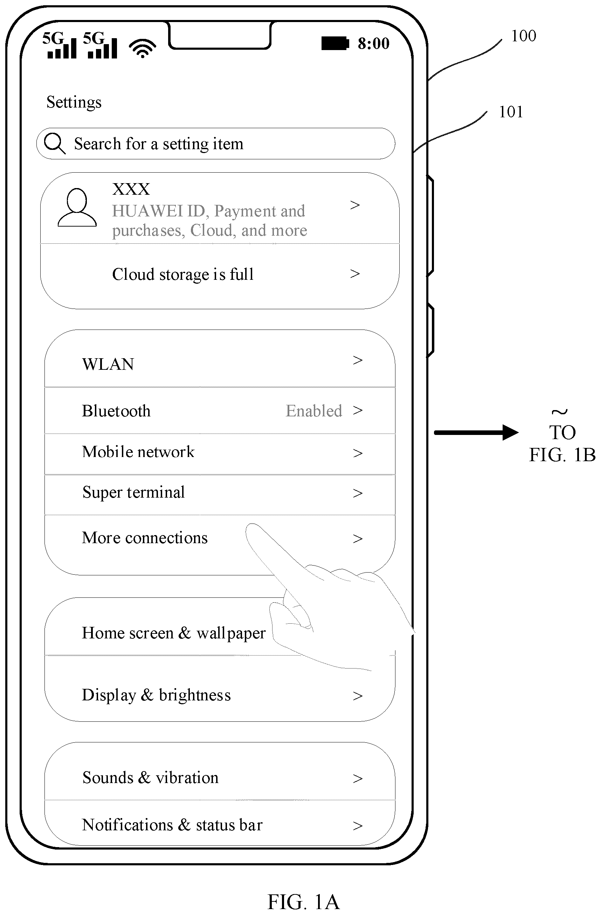

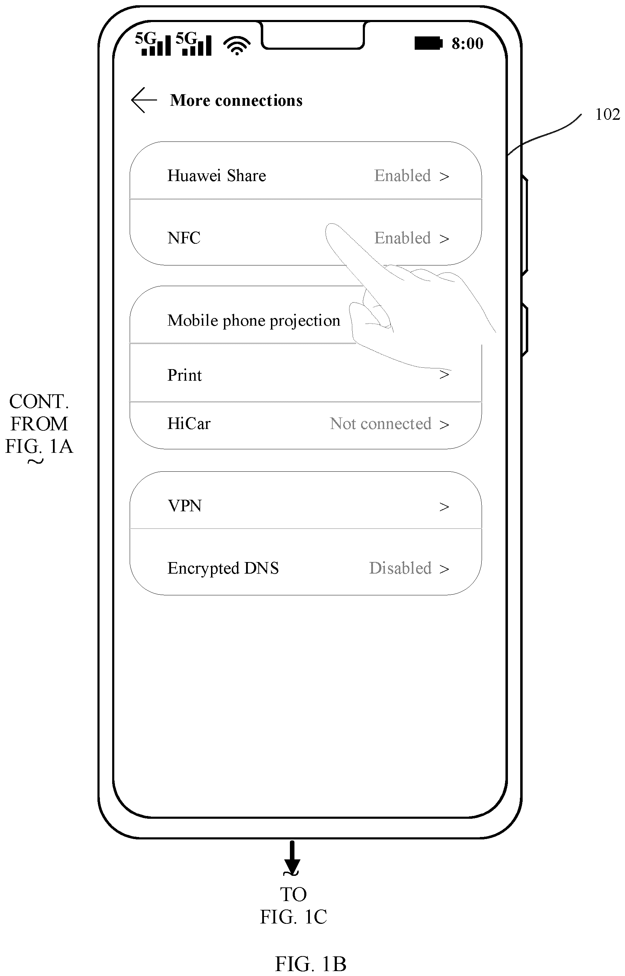

For example, the user originally sets a default payment application for NFC payment to "Huawei Wallet". In this case, to pass a subway turnstile, the user wants to set the default payment application to "Nanjing Transportation^{®}". Refer to FIG. 1A to FIG. 1D. The user needs to select "More connections" in a setting interface 101 of a mobile phone 100 to open a "More connections" interface shown as an interface 102, then select an "NFC" option in the interface 102 to change the interface to an interface shown as an interface 103, and select "Default payment application" in the interface 103 to enter a "Default payment application" selection interface shown as an interface 104. Finally, the user selects "Nanjing Transportation^{®}" as the default payment application for NFC payment in the "Default payment application" interface shown in the interface 104. It can be learned that in a process of setting and switching the default payment application, there are a relatively large quantity of user operations and the operations are excessively complex.

### SUMMARY

Embodiments of this application provide a payment method and a terminal, to resolve a conventional-technology problem of a complex operation of switching a default payment application in face of different payment scenarios when NFC payment is used.

According to a first aspect, an embodiment of this application provides a payment method, and the payment method includes: issuing, by a second payment application, a second payment card, where the second payment application is a non-system-default payment application for NFC payment, and the payment card is a virtual card that has a capability to perform a payment transaction by using an NFC payment capability; obtaining, by a first payment application, a second payment card snapshot of the second payment application, where the first payment application is set as a system-default payment application for NFC payment, and the second payment card snapshot includes a link for jumping to a payment interface of the second payment card; displaying the second payment card of the second payment application in an NFC payment interface of the first payment application in response to an operation of opening the NFC payment interface by a user; displaying, by the first payment application, a payment interface of the second payment application based on the second payment card snapshot of the second payment application in response to an operation of selecting the second payment card of the second payment application by the user; and interacting, by the second payment application, with a second terminal to complete payment.

In this embodiment of this application, the user can see the payment card of the second payment application in the first payment application, and can use different payment capabilities by selecting different payment cards.

In a possible implementation of the first aspect, the method further includes: The first payment application issues a first payment card.

In other words, the first payment application may also issue the first payment card of the first payment application.

In a possible implementation of the first aspect, after that the first payment application issues a first payment card, the method further includes: displaying the first payment card in the NFC payment interface in response to the operation of opening the NFC payment interface of the first payment application by the user.

In a possible implementation of the first aspect, the obtaining, by a first payment application, the second payment card snapshot of the second payment application includes: The first payment application sends a message for requesting to obtain the second payment card snapshot of the second payment application to the second payment application, and the second payment application sends the second payment card snapshot of the second payment application to the first payment application.

In other words, the first payment application may actively request to obtain the second payment card snapshot of the second payment application from the second payment application, and the second payment application sends the second payment card snapshot to the first payment application.

In a possible implementation of the first aspect, before the displaying, by the first payment application, a payment interface of the second payment application based on the second payment card snapshot of the second payment application, the method further includes: The first payment application obtains a status of a foreground payment application setting switch of an NFC payment setting of the first terminal, where the foreground payment application setting switch is used to control a function of prioritizing a foreground application to be enabled or disabled, and the function of prioritizing the foreground application is for using a payment application located in a current display interface as a preferred payment application. If the foreground payment application setting switch is not turned on, the first payment application sets the foreground payment application setting switch to an on state.

In other words, the status of the foreground payment application setting switch needs to be set to the on state, so that the first payment application can successfully display the payment interface of the second payment application based on the second payment card snapshot of the second payment application.

In a possible implementation of the first aspect, after the displaying, by the first payment application, a payment interface of the second payment application based on the second payment card snapshot of the second payment application, the method further includes: The second payment application interacts with the second terminal, and displays prompt information indicating that a balance is insufficient. The second payment application displays a recharge interface of the second payment application in response to an operation of choosing, by the user, to perform recharging. The second payment application displays a recharge completed interface in response to an operation of completing, by the user, recharging in the recharge interface of the second payment application.

In other words, when the user selects the second payment card of the second payment application to pay but the balance of the second payment card is insufficient, the user may perform a recharge operation on the second payment card.

In a possible implementation of the first aspect, after that the second payment application displays a recharge completed interface, the method further includes: The second payment application displays the payment interface of the second payment application.

In a possible implementation of the first aspect, after the interacting, by the second payment application, with the second terminal to complete payment, the method further includes: The second payment application closes the payment interface of the second payment application. The first payment application displays the second payment card in the NFC payment interface.

In a possible implementation of the first aspect, after the interacting, by the second payment application, with the second terminal to complete payment, the method further includes: The second payment application provides the first payment application with a message indicating that the balance of the second payment card is insufficient. The first payment application receives the message indicating that the balance of the second payment card is insufficient, and displays, in the NFC payment interface of the first payment application, information indicating that the balance of the second payment card is insufficient.

In a possible implementation of the first aspect, the second payment card snapshot further includes a link for jumping to a recharge interface of the second payment card, and the method further includes: The first payment application displays the recharge interface of the second payment application based on the second payment card snapshot in response to an operation of choosing, by the user, to recharge the second payment card. The second payment application displays, the recharge completed interface of the second payment application in response to an operation of completing, by the user, recharging in the recharge interface of the second payment application.

In other words, after the second payment application interacts with the second terminal to complete payment, when it is found that the balance of the second payment card is insufficient, the second payment card may be recharged.

In a possible implementation of the first aspect, after the displaying the recharge completed interface of the second payment application, the method further includes: The second payment application closes the recharge completed interface of the second payment application. The first payment application displays the second payment card in the NFC payment interface.

According to a second aspect, an embodiment of this application provides a first terminal device, including: a memory, configured to store instructions executed by one or more processors of the first terminal; a transceiver, configured to receive or send a radio signal; and a processor, where when the processor executes the instructions in the memory, the first terminal device may be enabled to implement the steps of the NFC payment method provided in the first aspect of embodiments of this application.

According to a third aspect, an embodiment of this application provides a chip, where the chip system includes a processing circuit and a storage medium, the storage medium stores computer program code, and when the computer program code is executed by the processing circuit, the steps of the NFC payment method provided in the first aspect of embodiments of this application are implemented.

According to a fourth aspect, an embodiment of this application provides a computer-readable storage medium, where the computer-readable storage medium is configured to store a computer program, and when the computer program is run on a computer, the computer is enabled to perform the steps of the NFC payment method provided in the first aspect of embodiments of this application.

### BRIEF DESCRIPTION OF DRAWINGS

FIG. 1A to FIG. 1D are a diagram of a process of selecting a default payment application in NFC payment in the conventional technology;
FIG. 2(a) is a diagram of an application scenario of an NFC payment method according to an embodiment of this application;
FIG. 2(b) is a diagram of another application scenario of an NFC payment method according to an embodiment of this application;
FIG. 3 is a diagram of a structure of a mobile phone according to an embodiment of this application;
FIG. 4 is a block diagram of a software structure of a first terminal and a second terminal according to an embodiment of this application;
FIG. 5 is a diagram of an architecture of a system of a first payment application and a second payment application according to an embodiment of this application;
FIG. 6A and FIG. 6B are a diagram of a setting interface for prioritizing a foreground application according to an embodiment of this application;
FIG. 7(a)-1 to FIG. 7(a)-3 are a first diagram of a process of an NFC payment method according to an embodiment of this application;
FIG. 7(b)-1 to FIG. 7(b)-5 are a second diagram of a process of an NFC payment method according to an embodiment of this application;
FIG. 7(c)-1 to FIG. 7(c)-6 are a third diagram of a process of an NFC payment method according to an embodiment of this application;
FIG. 8(a)-1 to FIG. 8(a)-3 are a fourth diagram of a process of an NFC payment method according to an embodiment of this application;
FIG. 8(b)-1 to FIG. 8(b)-4 are a fifth diagram of a process of an NFC payment method according to an embodiment of this application;

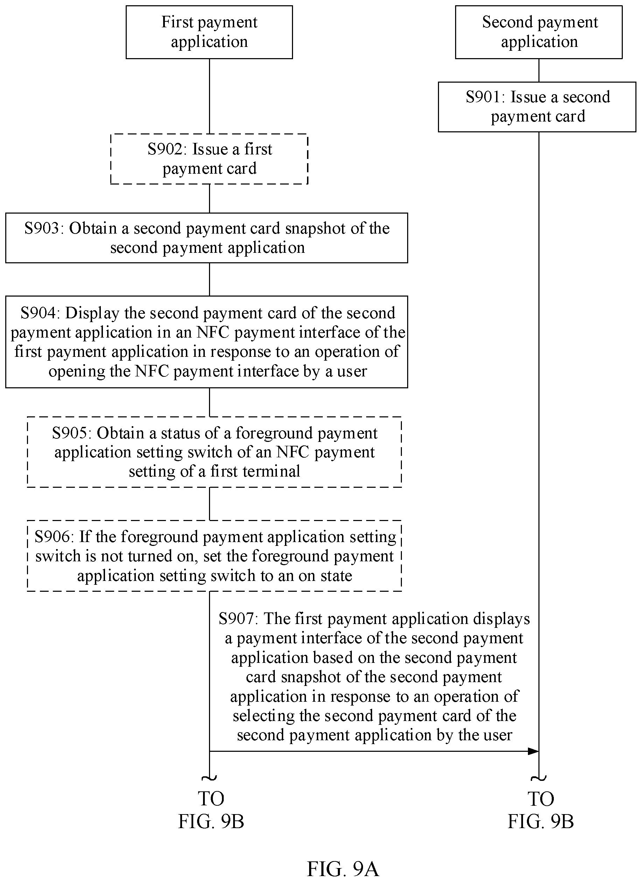

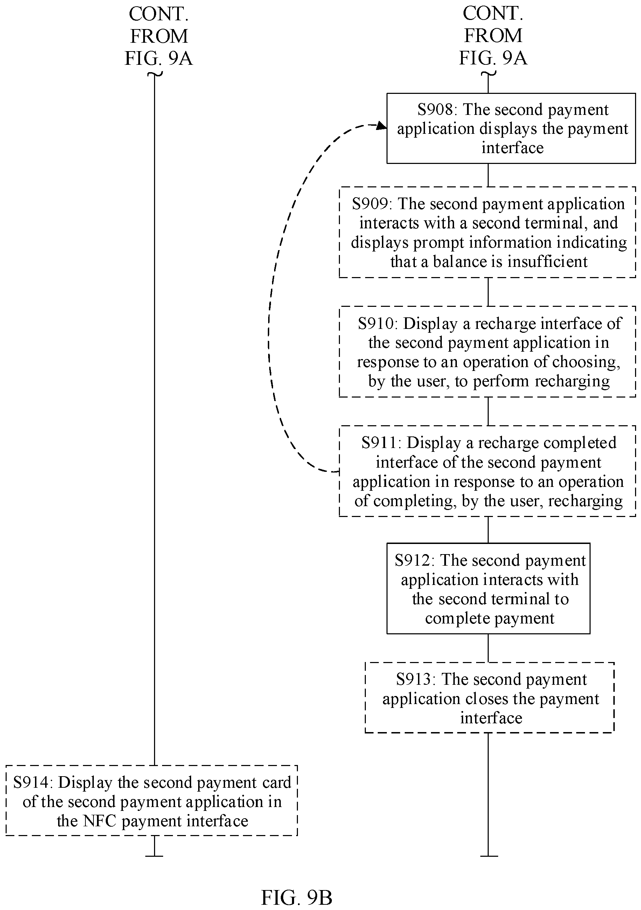

FIG. 9A and FIG. 9B are a first schematic flowchart of an NFC payment method according to an embodiment of this application;

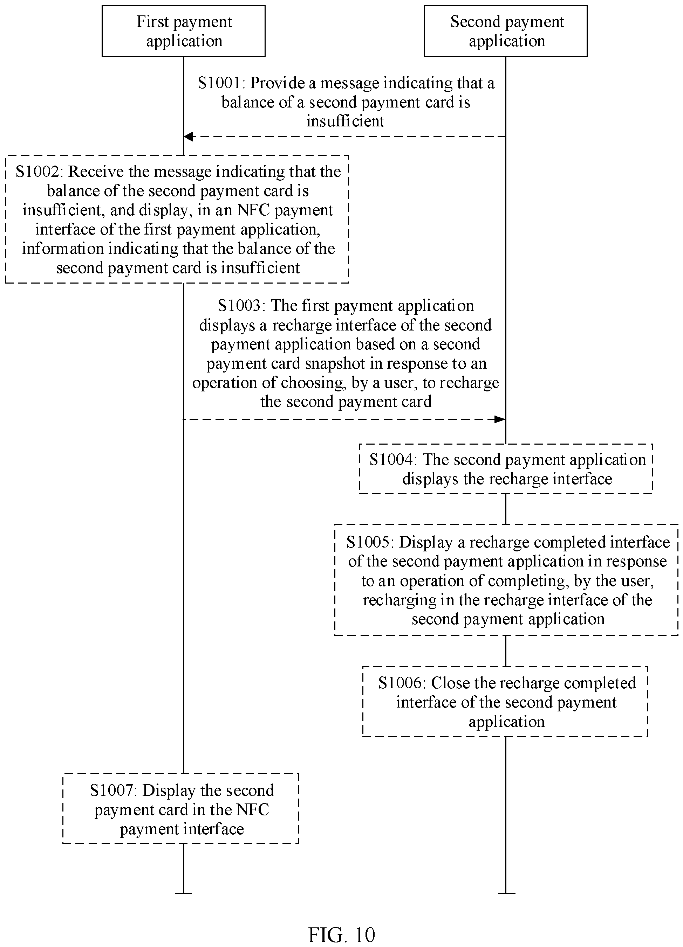

FIG. 10 is a second schematic flowchart of an NFC payment method according to an embodiment of this application;

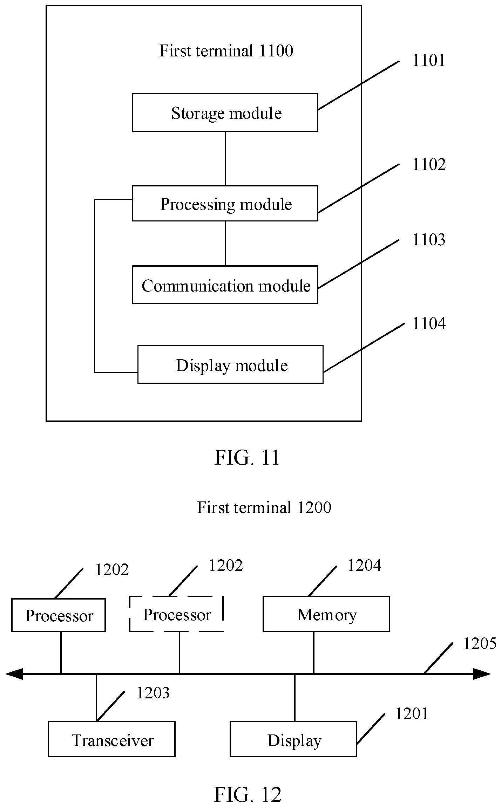

FIG. 11 is a first diagram of a structure of a first terminal according to an embodiment of this application; and
FIG. 12 is a second diagram of a structure of a first terminal according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, unless otherwise specified, "a plurality of" means two or more.

Near field communication (Near Field Communication, NFC) is a short-range wireless connection technology based on a radio frequency identification (Radio Frequency Identification, RFID) technology. NFC runs within a distance of 10 centimeters at an operating frequency of 13.56 MHz±7 kHz, and has three transmission speeds: 106 kbit/s, 212 kbit/s, and 424 kbit/s. At present, the NFC technology has become a related international standard and is widely applied. The NFC technology implements short-range communication between NFC terminals through radio frequency field sensing. Two NFC terminals can quickly, securely, and contactlessly exchange information and content and perform a transaction by touching each other or being brought close to each other.

Specifically, working modes of an NFC terminal may be classified into three types: 1. Card reader mode (Reader/Writer, R/W), where the NFC terminal is used as a contactless card reader in this mode, for example, the NFC terminal reads related information from an NFC tag of a poster or an exhibition. In this mode, the NFC terminal with a read/write function may collect data from the NFC tag, and then process the data. A typical scenario based on this mode includes reading an electronic advertisement, selling a transportation ticket, selling a movie ticket, or the like. For example, an NFC tag is attached to a movie poster, and a user may bring a terminal that supports NFC close to the movie poster, to obtain detailed information about the movie. The card reader mode can also be used to obtain simple data, for example, obtaining information about a bus stop location, a park map, or other information. 2. Peer-to-Peer (Peer-to-Peer, P2P) mode, where in this mode, two NFC terminals can quickly establish a connection to implement point-to-point data transmission. Based on this mode, wireless interconnection can be performed between a plurality of digital cameras, tablet computers, and mobile phones that have an NFC function, to implement data exchange. A typical application scenario based on this mode includes quickly establishing a Bluetooth connection, exchanging contact cards, or the like. 3. Card emulation (Card Emulation, CE) mode, where this mode is specifically used in a mobile payment or identity verification scenario in which a bank card, a transportation card, a membership card, a coupon, an identity card, or the like, is used. In the card emulation mode, an NFC card reader is an active device that generates an NFC radio frequency field, and the NFC terminal is a passive device that emulates a contactless radio frequency card complying with an NFC standard to exchange data with the NFC card reader. This mode is mainly used in contactless mobile payment scenarios such as stores and transportation. A user only needs to bring the NFC terminal close to the NFC card reader, and enter a password to confirm a transaction or directly accept a transaction. In this way, the NFC terminal can be used to perform a contactless payment service without changing an existing facility. Atypical scenario based on this mode includes local payment, access control, or the like.

In the card emulation mode, an existing NFC terminal can simultaneously support three types of emulation cards. An emulation card is a radio frequency card emulated by a mobile device by using NFC hardware. The three types of emulation cards are respectively a bank card, a bus card, and an access control card. The three types of emulation cards are virtual cards, and may also be referred to as payment cards.

For example, the NFC terminal is a mobile phone. Currently, when a payment application provided by a financial institution such as a bank is installed on the mobile phone, the mobile phone can complete payment in a card emulation working mode. To be specific, a payment application is downloaded to and installed on the mobile phone, and the payment application is bound to a physical card to implement card emulation for the mobile phone. In this way, a conventional physical integrated circuit (IC, Integrated Circuit) card can be replaced, and payment can be performed directly by using the mobile phone.

However, when a user needs to switch a default payment application in face of different NFC payment scenarios, a plurality of complex setting operations shown in FIG. 1A to FIG. 1D need to be performed. This severely reduces an intelligent interaction capability between a terminal device and the user, causes low use efficiency of the terminal device, and brings inconvenience to the user.

To resolve a conventional-technology problem of a complex operation of switching a default payment application in face of different payment scenarios when NFC payment is used, in embodiments of this application, different payment applications in NFC payment are integrated, to provide a method for completing NFC payment by tapping a card without switching a default payment application in face of different payment scenarios.

The NFC payment method provided in embodiments of this application is applied to a scenario in which payment is performed between two different terminals supporting an NFC function. For ease of description, in embodiments of this application, the two different terminals supporting an NFC function are referred to as a first terminal and a second terminal. The first terminal may be a mobile phone, a tablet computer, a notebook computer, an ultra-mobile personal computer, a netbook, a personal digital assistant, a wearable device, or the like. The second terminal may also be a device such as a mobile phone, a tablet computer, a notebook computer, a wearable device, or a POS terminal.

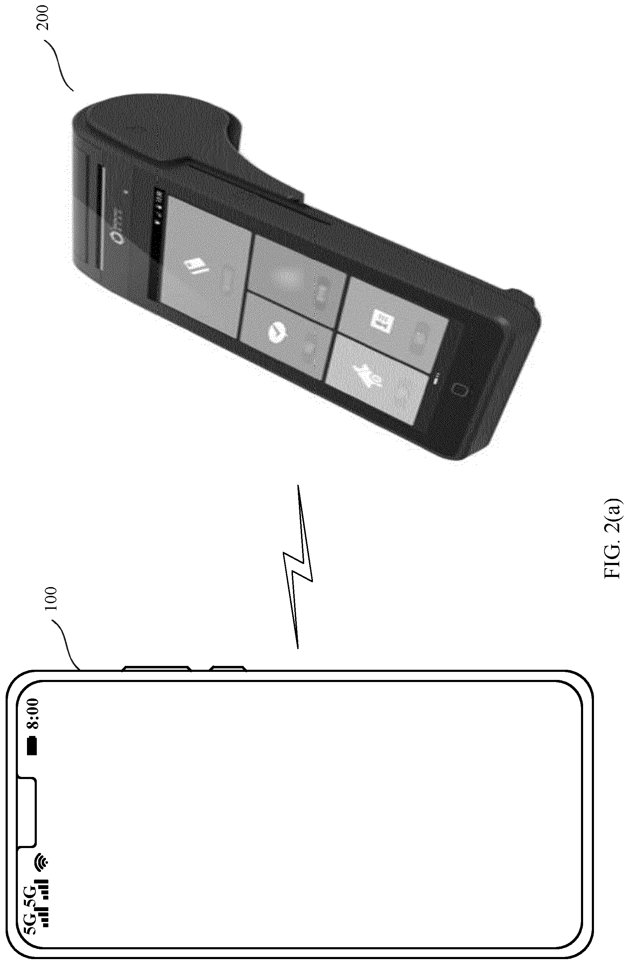

For example, as shown in FIG. 2(a), the first terminal mentioned in embodiments of this application may be a mobile phone 100, and the second terminal mentioned in embodiments of this application may be a POS terminal 200.

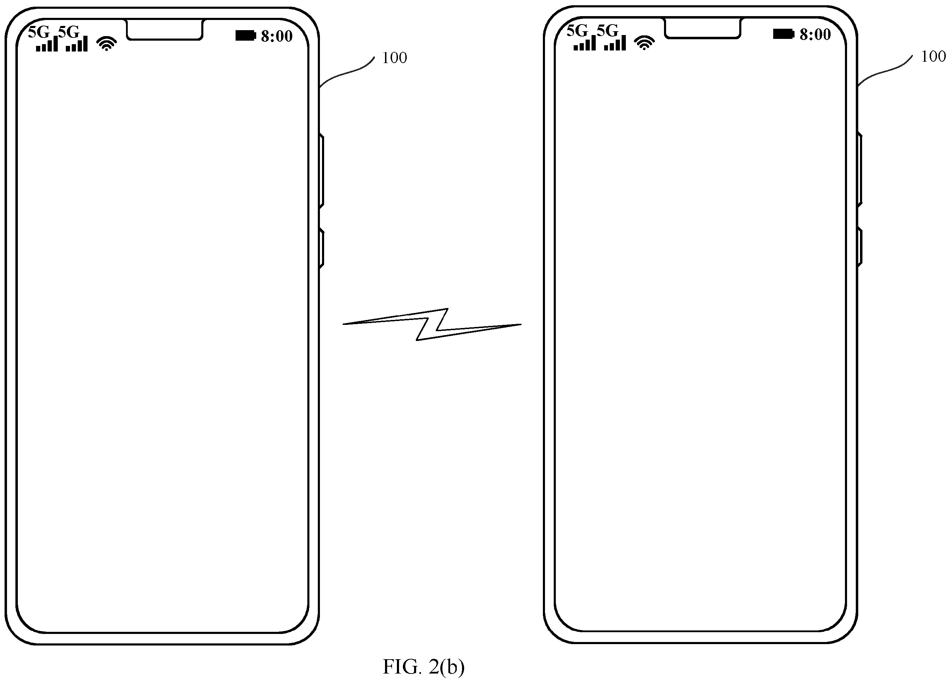

For example, as shown in FIG. 2(b), both the first terminal and the second terminal mentioned in embodiments of this application may be the mobile phones 100.

Both the first terminal and the second terminal mentioned in embodiments of this application support an NFC function. In addition, a payment application that can support NFC payment is installed on the first terminal and the second terminal. The payment application may be an application pre-installed by a manufacturer of the first terminal or the second terminal, which may also be referred to as an application provided by a system, and can carry a card emulation application that supports NFC payment, such as a bank card or a bus card. The payment application may alternatively be a third-party application, and mainly is an application that is provided by a payment service provider and that has an online card binding function (it may be understood that an association record between an account of the third-party payment application and a card bound online to the account of the third-party payment application can be stored at a server end, and a card application and personal data do not need to be downloaded locally to the terminal to emulate a card). In other words, the third-party payment application described in embodiments of this application includes but is not limited to an application that provides only online card binding and online payment functions, or an application that provides at least online card binding and online payment functions, for example, the third-party payment application includes Bank of China^{®}, Alipay^{®}, WeChat^{®}, and the like.

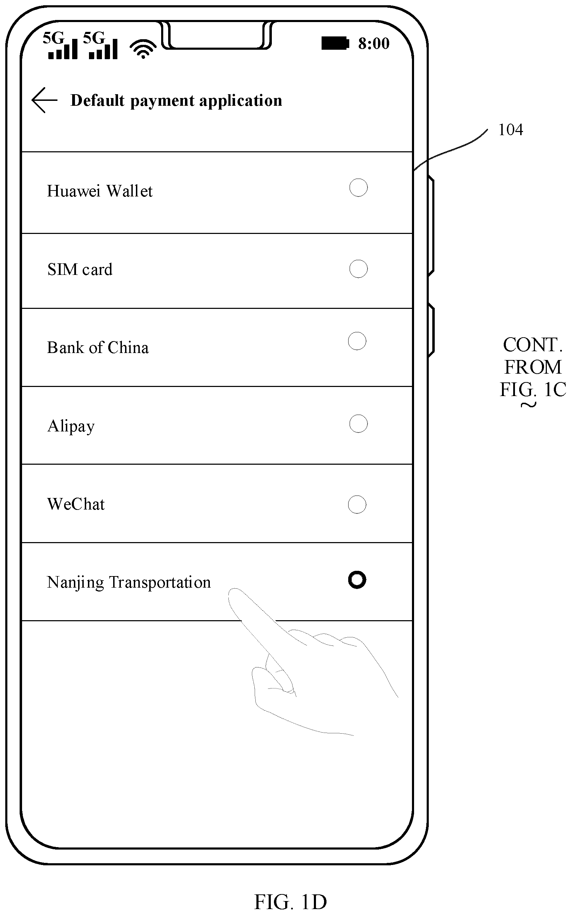

It should be noted that the third-party payment application described in embodiments of this application usually supports a user in setting the third-party payment application as a default payment application for NFC payment, for example, Bank of China^{®}, Alipay^{®}, WeChat^{®}, and the like shown in an interface 104 in FIG. 1D. Some third-party applications, such as Bank of China^{®}, can issue a payment card and can successfully perform payment through NFC payment. Some third-party applications, such as Alipay^{®} and WeChat^{®}, may not have a capability to issue a payment card. Therefore, these third-party applications may not be able to normally perform payment by using an NFC payment capability after being set as the default payment application. In the NFC payment method provided in embodiments of this application, these third-party applications may also successfully complete payment by invoking an NFC payment capability of another payment application.

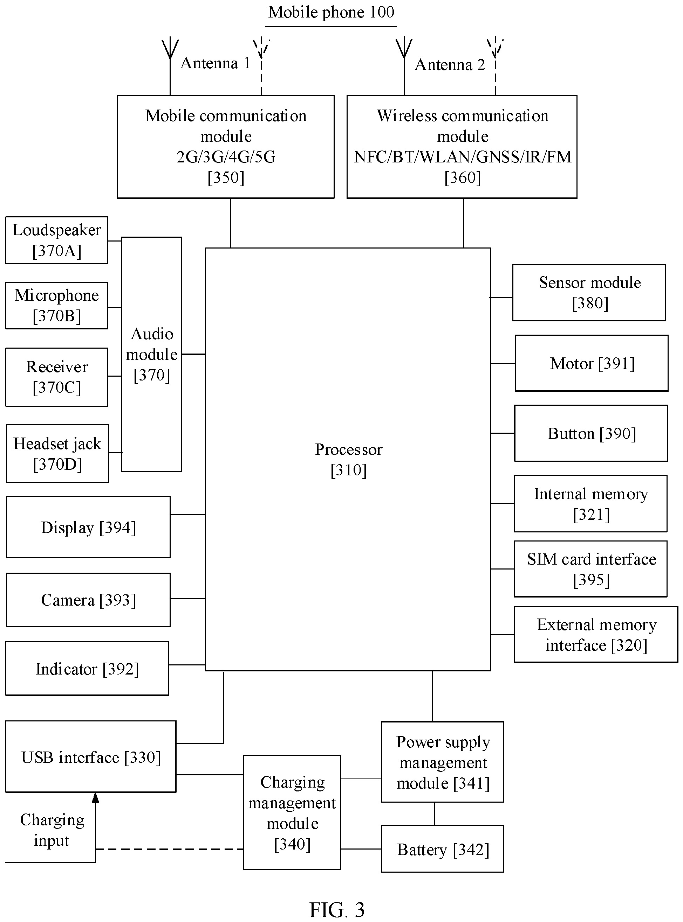

For example, both the first terminal and the second terminal are mobile phones. As shown in FIG. 3, the mobile phone 100 includes:
a processor 310, a memory (including an external memory interface 320 and an internal memory 321), a universal serial bus (universal serial bus, USB) interface 330, a charging management module 340, a power supply management module 341, a battery 342, an antenna 1, an antenna 2, a mobile communication module 350, a wireless communication module 360, an audio module 370, a loudspeaker 370A, a receiver 370B, a microphone 370C, a headset jack 370D, a sensor module 380, a button 390, a motor 391, an indicator 392, a camera 393, a display 394, a subscriber identity module (subscriber identity module, SIM) card interface 395, and the like.

It can be understood that the structure shown in this embodiment of the present invention does not constitute a specific limitation on the mobile phone. In some other embodiments of this application, the mobile phone may include more or fewer components than those shown in the figure, or combine some components, or split some components, or have different component arrangements. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, and/or a neural-network processing unit (neural-network processing unit, NPU). Different processing units may be independent components, or may be integrated into one or more processors.

In some embodiments, the mobile phone 100 may alternatively include one or more processors 310. The controller may generate an operation control signal based on instruction operation code and a time sequence signal, to complete control of instruction fetching and instruction execution. In some other embodiments, a memory may be further disposed in the processor 310, to store instructions and data. For example, the memory in the processor 310 may be a cache. The memory may store instructions or data just used or cyclically used by the processor 310. If the processor 310 needs to use the instructions or the data again, the processor may directly invoke the instructions or the data from the memory. In this way, repeated access is avoided, and waiting time of the processor 310 is reduced, so that efficiency of processing data or executing instructions by the mobile phone 100 is improved.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The external memory interface 320 may be configured to connect to an external storage card, for example, a micro SD card, to extend a storage capability of the mobile phone 100. The external storage card communicates with the processor 310 through the external memory interface 320, to implement a data storage function. For example, files such as music and videos are stored in the external storage card.

The internal memory 321 may be configured to store computer-executable program code. The executable program code includes instructions. The internal memory 321 may include a program storage area and a data storage area. The program storage area may store an operating system, an application required for at least one function (such as a sound playing function or an image display function), and the like. The data storage area may store data (for example, audio data or a phone book) created during use of the mobile phone 100, and the like. In addition, the internal memory 321 may include a high-speed random access memory, and may further include a non-volatile memory, for example, at least one magnetic disk storage device, a flash memory, or a universal flash storage (universal flash storage, UFS). The processor 310 runs the instructions stored in the internal memory 321 and/or the instructions stored in the memory disposed in the processor, to implement various function applications and data processing of the mobile phone 100.

The charging management module 340 is configured to receive a charging input from a charger. The charger may be a wireless charger or a wired charger. In some embodiments of wired charging, the charging management module 340 may receive a charging input of the wired charger through the USB interface 330. In some embodiments of wireless charging, the charging management module 340 may receive a wireless charging input by using a wireless charging coil of the mobile phone 100. The charging management module 340 may supply power to the mobile phone 100 by using the power supply management module 341 while charging the battery 342.

The power supply management module 341 is configured to connect the battery 342, the charging management module 340, and the processor 310. The power supply management module 341 receives an input of the battery 342 and/or an input of the charging management module 340, and supplies power to the processor 310, the internal memory 321, the display 394, the camera assembly 393, the wireless communication module 360, and the like. The power supply management module 341 may be further configured to monitor parameters such as a battery capacity, a battery cycle count, and a battery health status (electric leakage or impedance). In some other embodiments, the power supply management module 341 may alternatively be disposed in the processor 310. In some other embodiments, the power supply management module 341 and the charging management module 340 may alternatively be disposed in a same component.

A wireless communication function of the mobile phone 100 may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the mobile phone 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a solution for wireless communication including 2G/3G/4G/5G and the like applied to the mobile phone 100. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules in the mobile communication module 350 may be disposed in the processor 310. In some embodiments, at least some functional modules in the mobile communication module 350 may be disposed in a same component as at least some modules in the processor 310.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the loudspeaker 370A, receiver 370B, and the like), or displays an image or video through the display 394. In some embodiments, the modem processor may be an independent component. In some other embodiments, the modem processor may be independent of the processor 310, and is disposed in a same component as the mobile communication module 350 or another functional module.

The wireless communication module 360 may provide a solution for wireless communication that is applied to the mobile phone 100 and that includes a near field communication (near field communication, NFC) technology, a wireless local area network (wireless local area network, WLAN) (such as a Wi-Fi network), Bluetooth BT, a global navigation satellite system (global navigation satellite system, GNSS), frequency modulation (frequency modulation, FM), an infrared (infrared, IR) technology, and the like. The wireless communication module 360 may be one or more components integrating at least one communication processing module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In this embodiment of this application, an NFC module included in the wireless communication module 360 may further include an NFC controller (Near Field Communication Controller, NFCC), and functions of the NFC controller include radio frequency signal modulation and demodulation and NFC protocol processing. The NFCC is connected to a radio frequency antenna (namely, an NFC antenna) to send and receive an NFC signal.

Optionally, the mobile phone 100 may further include a secure element (security element, SE), to implement NFC payment. The SE is configured to securely store sensitive information and provide a secure execution environment for a transaction. The SE may be integrated into the processor 310, may be located in a subscriber identification module (Subscriber Identification Module, SIM) card of the mobile phone 100, may be located in a secure digital memory card (Secure Digital Memory Card, SD) of the mobile phone, or may be an independent chip. The NFCC and the SE may be connected to each other.

In some embodiments, the antenna 1 of the mobile phone 100 is coupled to the mobile communication module 350, and the antenna 2 is coupled to the wireless communication module 360, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), and/or a satellite based augmentation system (satellite based augmentation systems, SBAS). The mobile phone 100 may establish a communication connection to another device by using the mobile communication module 350, and perform data transmission with the another device through the established communication connection.

The mobile phone 100 implements a display function by using the GPU, the display 394, the application processor, and the like. The GPU is a microprocessor for image processing, and is connected to the display 394 and the application processor. The GPU is configured to: perform mathematical and geometric computation for image rendering. The processor 310 may include one or more GPUs that execute program instructions to generate or change displayed information. In this embodiment of this application, the GPU may be configured to convert and drive displayed information required by a computer system, and provide a row scanning signal to a display, to control correct display of the display.

The display 394 is configured to display an image, a video, or the like. The display 394 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the mobile phone 100 may include one or N displays 394, where N is a positive integer greater than 1.

The mobile phone 100 may implement a photographing function by using the ISP, the camera assembly 393, the video codec, the GPU, the display 394, the application processor, and the like.

The mobile phone 100 may implement an audio function, for example, music playing and sound recording by using the audio module 370, the loudspeaker 370A, the receiver 370B, the microphone 370C, the application processor, and the like. For specific working principles and functions of the audio module 370, the loudspeaker 370A, the receiver 370B, and the microphone 370C, refer to descriptions in a conventional technology.

The sensor module 380 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 390 includes a power button, a volume button, and the like. The button 390 may be a mechanical button, or a touch button. The mobile phone 100 may receive a button input, and generate a button signal input related to user settings and function control of the mobile phone 100.

The motor 391 may generate a vibration prompt. The motor 391 may be configured to provide an incoming call vibration prompt or a touch vibration feedback. For example, touch operations performed on different applications (for example, photographing and audio playing) may correspond to different vibration feedback effect. The motor 391 may also correspond to different vibration feedback effect for touch operations performed on different areas of the display 394. Different application scenarios (for example, a time reminder, information receiving, an alarm clock, and a game) may also correspond to different vibration feedback effect. Touch vibration feedback effect may be further customized.

The indicator 392 may be an indicator light, may be configured to indicate a charging status and a power change, and may also be configured to indicate a message, a missed call, a notification, and the like.

The camera 393 is configured to capture an image. The camera may be a wide-angle camera, a primary camera, a macro camera, a long-focus camera, a time of flight (time of flight, TOF) camera, or the like.

The SIM card interface 395 is configured to connect to a SIM card. The SIM card may be inserted into the SIM card interface 395 or removed from the SIM card interface 395, to implement contact with or separation from the mobile phone 100. The mobile phone 100 may support one or N SIM card interfaces, where N is a positive integer greater than 1. The SIM card interface 395 may support a nano-SIM card, a micro-SIM card, a SIM card, and the like. A plurality of cards may be simultaneously inserted into a same SIM card interface 395. The plurality of cards may be of a same type or different types. The SIM card interface 395 may also be compatible with different types of SIM cards. The SIM card interface 395 may also be compatible with an external storage card. The mobile phone 100 interacts with a network by using the SIM card, to implement functions such as call making/answering and data communication. In some embodiments, the mobile phone 100 uses an eSIM, that is, an embedded SIM card. The eSIM card may be embedded into the mobile phone 100, and cannot be separated from the mobile phone 100.

It should be noted that the hardware modules included in the mobile phone 100 shown in FIG. 3 are merely described as examples, and do not limit a specific structure of the mobile phone 100. For example, the mobile phone 100 may further include another functional module.

The following describes a software system architecture of the first terminal and the second terminal. For example, a software system of the first terminal and the second terminal provided in this embodiment of this application may use a layered architecture, an event-driven architecture, a microkernel architecture, a microservice architecture, a cloud architecture, or the like. For example, the software system may include but is not limited to operating systems such as Symbian^{®} (Symbian), Android^{®} (Android), Windows^{®}, Apple^{®} (iOS), Blackberry^{®} (Blackberry), and Harmony (Harmony). This is not limited in this application.

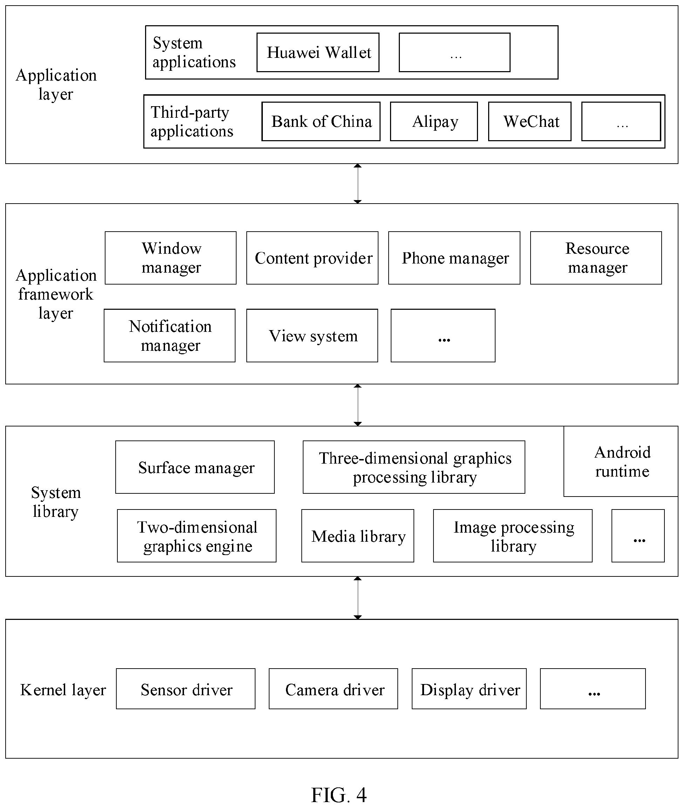

Refer to FIG. 4. FIG. 4 specifically describes a block diagram of a software structure of the first terminal and the second terminal in embodiments of this application by using an Android^{®} operating system with a layered architecture as an example.

In the layered architecture, software is divided into several layers, and each layer has a clear role and task. The layers communicate with each other through a software interface. In some embodiments, the Android^{®} operating system is divided into four layers: an application layer, an application framework layer, an Android runtime (Android runtime) and system library, and a kernel layer from top to bottom.

The application layer may include a series of application packages, including a system application and a third-party application, and may include applications such as Video, Camera, Gallery, Calendar, Call, Map, Navigation, WLAN, Bluetooth, Music, and Messaging. For example, in this embodiment of this application, the system application includes Huawei Wallet that supports NFC payment, and the third-party application includes Bank of China^{®}, Alipay^{®}, WeChat^{®}, and the like.

The application framework layer provides an application programming interface (application programming interface, API) and a programming framework for an application at the application layer. The application framework layer includes some predefined functions. As shown in FIG. 4, the application framework layer may include a window manager, a content provider, a view system, a phone manager, a resource manager, a notification manager, and the like. For example, in this embodiment of this application, the application framework layer may provide a setting capability for payment applications such as Huawei Wallet in a system application or Bank of China^{®}, Alipay^{®}, and WeChat^{®} in a third-party application at the application layer, that is, set these applications as foreground payment applications.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including a notification icon of Messaging may include a text display view and an image display view.

The phone manager is configured to provide a communication function for the electronic device 100, for example, management of a call status (including answering, declining, or the like), management of a voice call function and a video call function, and the like.

The resource manager provides various resources such as a localized character string, an icon, an image, a layout file, and a video file for an application.

The notification manager enables an application to display notification information in the status bar, and may be configured to convey a notification message. The displayed notification information may automatically disappear after a short stay without user interaction. For example, the notification manager is configured to notify download completion, provide a message notification, and the like. The notification manager may alternatively be a notification that appears in a top status bar of the system in a form of graph or scroll bar text, for example, a notification of an application that is run in a background, or may be a notification that appears on the screen in a form of dialog window. For example, text information is prompted in the status bar, a prompt tone is made, the electronic device vibrates, or the indicator light flashes.

The Android runtime includes a kernel library and a virtual machine. The Android runtime is responsible for scheduling and management of an Android^{®} system.

The kernel library includes two parts: a function that needs to be invoked in a Java language and a kernel library of Android^{®}.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports playback and recording in a plurality of commonly used audio and video formats, a static image file, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver. For example, the display driver may drive a display to display screen content. The camera driver may drive the camera to capture an image. The audio driver is configured to drive an audio player to play audio.

It should be noted that FIG. 4 describes the block diagram of the software structure of the first terminal or the second terminal by using only an Android^{®} system with a layered architecture as an example. Specific architectures of software systems of the first terminal and the second terminal are not limited in this application. For specific descriptions of a software system of another architecture, refer to a conventional technology.

Embodiments of this application provide an NFC payment method. In the method, after one of a plurality of NFC payment applications is selected as a first payment application, namely, a system-default payment application for NFC payment, and a remaining payment application is selected as a second payment application, namely, a non-system-default payment application for NFC payment, the second payment application issues a second payment card. The first payment application obtains a second payment card snapshot of the second payment application. The second payment card of the second payment application is displayed in an NFC payment interface of the first payment application in response to an operation of opening the NFC payment interface by a user. The first payment application displays a payment interface of the second payment application based on the second payment card snapshot of the second payment application in response to an operation of selecting the second payment card of the second payment application by the user. The second payment application interacts with a second terminal to complete payment.

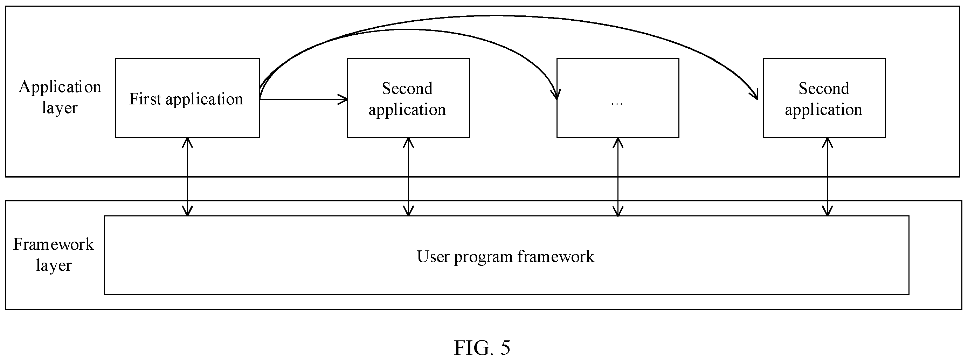

Through the foregoing steps, when the user faces different payment scenarios and wants to switch a payment application, complex setting and switching operations shown in FIG. 1A to FIG. 1D do not need to be performed. Both the first payment application and the second payment application are located at an application layer shown in FIG. 4. A user program framework at an application framework layer can set the second payment application as a foreground payment application. A diagram of an architecture of a system of the first payment application and the second payment application is shown in FIG. 5.

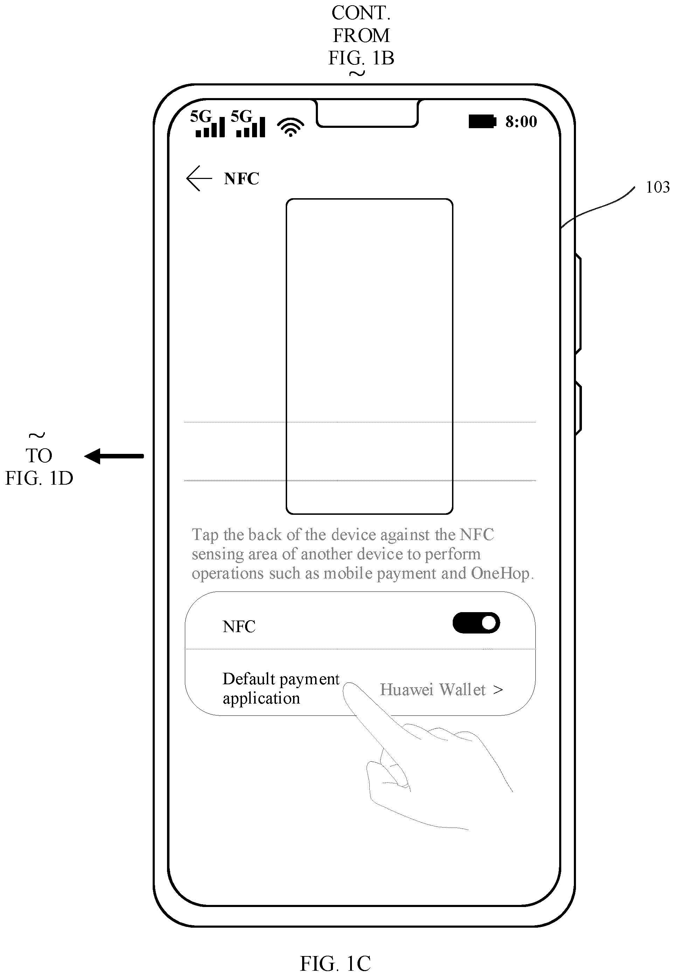

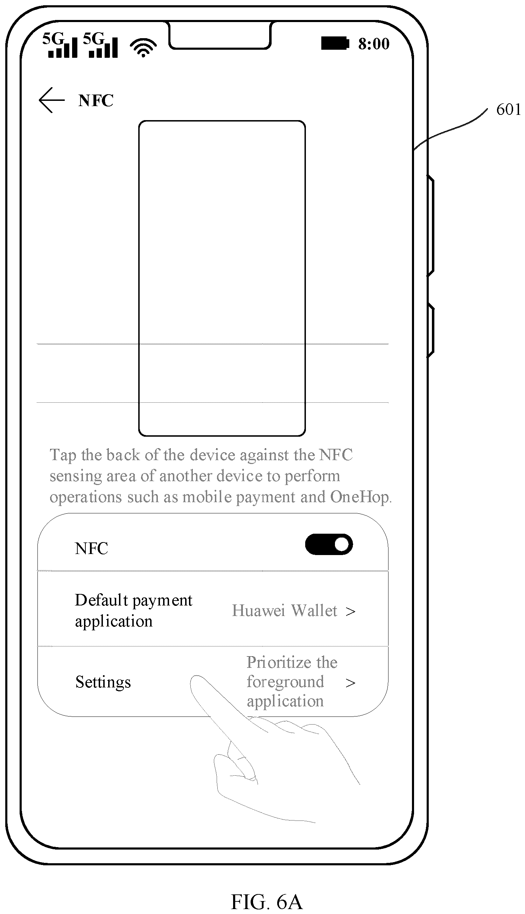

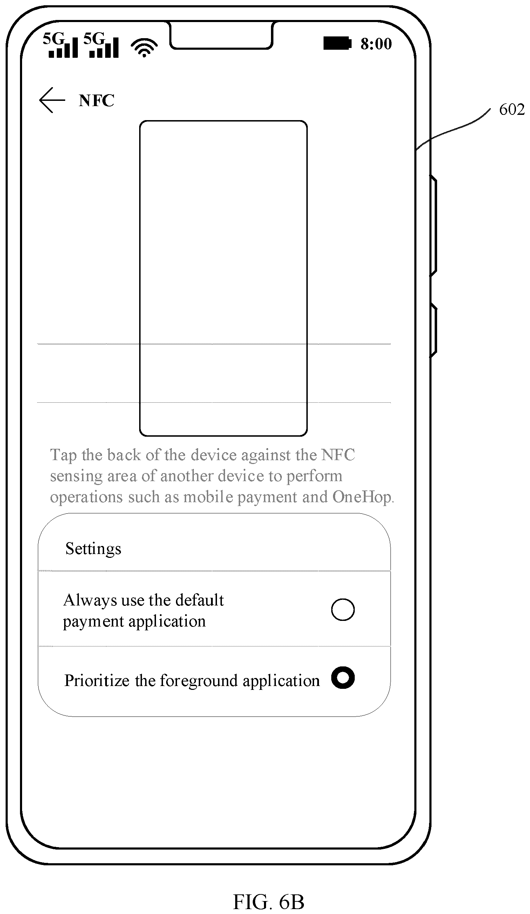

It should be noted that a setting capability to prioritize the foreground application (Prioritize currently running app) in the user program framework is used to set the second payment application as the foreground payment application. In an NFC payment scenario, prioritizing a foreground application means to set a payment application located in a current display interface as a preferred payment application. In this embodiment of this application, when the user selects the second payment card of the second payment application in the first payment application, the second payment application is launched by the first payment application and is in a running state, and appears in the current display interface. In this case, the second payment application sends, to the system, a message for setting the second payment application as the foreground payment application. The user program framework of the system sets the second payment application as a preferred payment application in a current payment scenario by using the setting capability to prioritize the foreground application. A foreground payment application setting may be set by a program in a background, or an explicit setting switch may be provided for the user to select. For example, in an NFC payment scenario, a foreground payment application setting switch may be provided in an NFC payment setting interface shown in FIG. 6A and FIG. 6B for the user to select. An interface 601 in FIG. 6A is different from the interface 103 in FIG. 1C in that there is an additional "Settings" option under the "Default payment application" option. After the user selects the "Settings" option, an interface 602 is entered. In the interface 602, the user may choose to enable "Prioritize the foreground application". More specifically, an Android^{®} system is used as an example. The user program framework may invoke CardEmulation. categoryAllowsForegroundPreference(CardEmulation.CATEGORY_PAYMENT) in an android.nfc.cardemulation package to enable "Prioritize the foreground application".

It should be understood that "Prioritize the foreground application" and "Always use the default payment application" are mutually exclusive. To be specific, after "Prioritize the foreground application" is selected, the system uses a currently running program to perform NFC payment, and does not always use a default NFC payment application.

In FIG. 5, the first payment application may be a payment application that is provided by the system and that supports NFC payment, for example, Huawei Wallet, or may be a third-party payment application, for example, Alipay^{®}. The first payment application may be an application that supports an NFC function and that has a capability to issue a payment card, for example, Bank of China^{®}, or may be an application that supports an NFC function but does not have a capability to issue a payment card, for example, WeChat^{®}. The first payment application may be set as a default payment application for NFC payment in the system, and may be loaded with a payment card snapshot of the second payment application. A payment card snapshot includes information such as a payment card identifier ID, a card face image, a link for jumping to a card recharge interface, and a link for jumping to a card payment interface.

The second payment application may be a payment application that is provided by the system and that supports NFC payment, for example, Huawei Wallet, or may be a third-party payment application, for example, Bank of China^{®}. It should be noted that the second payment application is an application that supports an NFC function and has a capability to issue a payment card, so that after the second payment application is launched by the first payment application, when the second payment application is set as the foreground payment application by using the user program framework, payment can be made normally by using the payment card. The second payment application may provide a payment card snapshot for the first payment application, and when being launched by the first payment application, send, to the user program framework, the message for setting the second payment application as the foreground payment application.

The user program framework at the application framework layer may provide a capability to set each second payment application at the application layer as the foreground payment application.

An example in which a mobile phone is used as the first terminal for NFC payment is used. FIG. 7(a)-1 to FIG. 7(a)-3 are a diagram in which an interface on the mobile phone changes with a user operation in an NFC payment method according to an embodiment of this application.

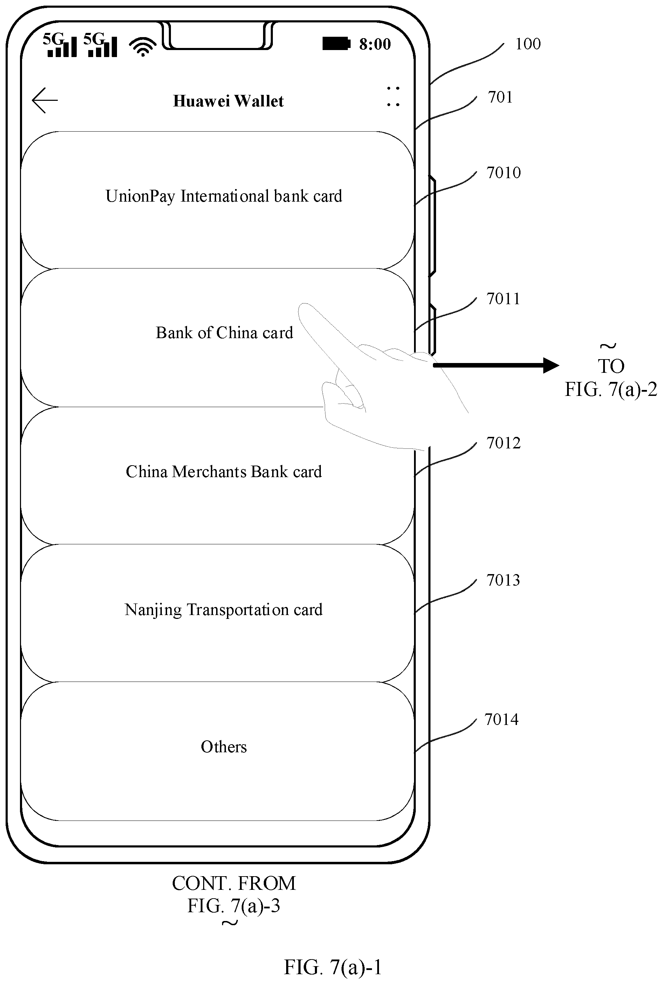

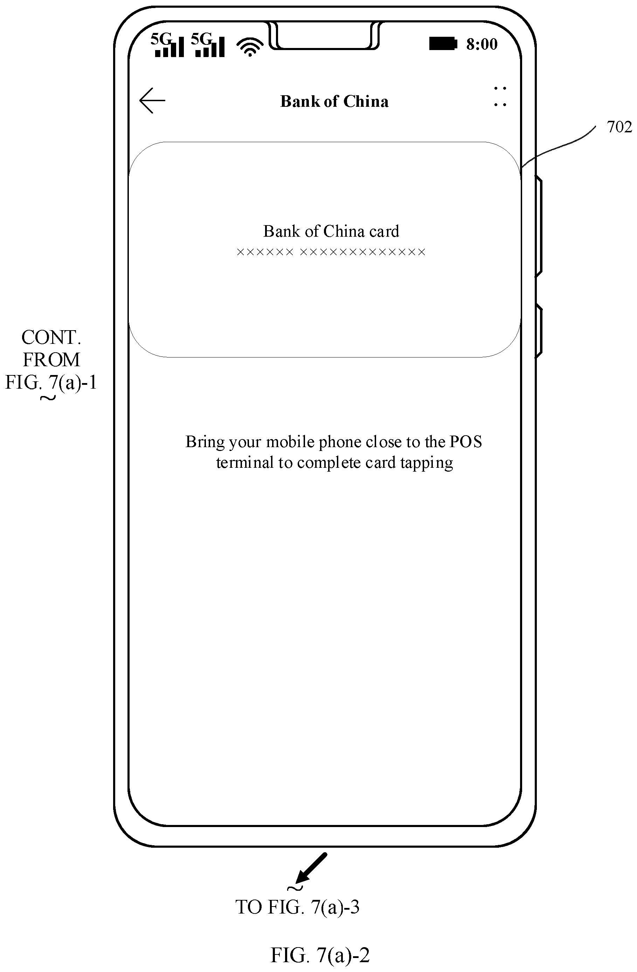

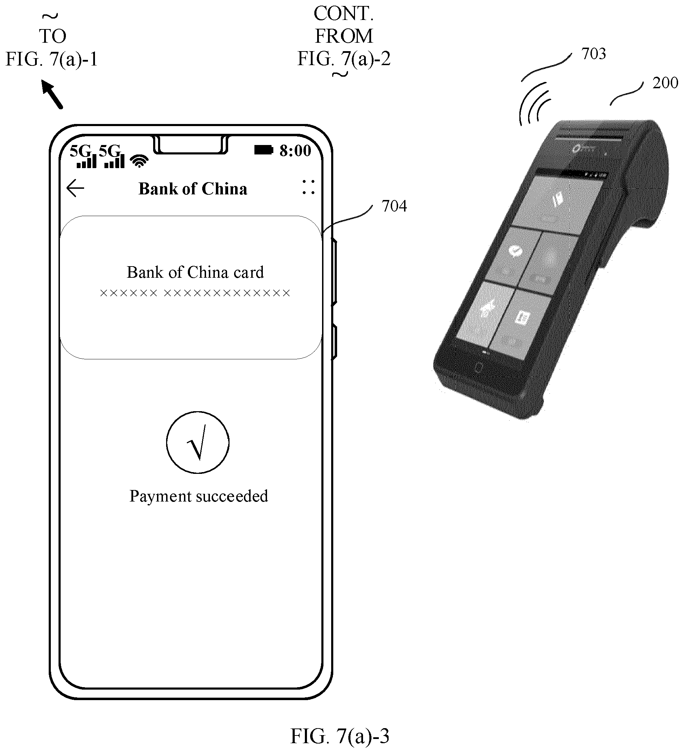

In FIG. 7(a)-1, the first payment application is Huawei Wallet, namely, the default payment application for NFC payment in the system, and the second payment applications are Bank of China^{®} and Nanjing Transportation^{®}. When the user uses an NFC payment function of Huawei Wallet, an interface shown in an interface 701 on the mobile phone 100 in FIG. 7(a)-1 appears. It should be noted that, as an application that is provided by the system and that supports an NFC function, Huawei Wallet can issue a payment card. For example, Huawei Wallet shown in FIG. 7(a)-1 issues a UnionPay International bank card 7010. It is assumed that the second payment application Bank of China^{®} payment application issues a payment card. In this case, the payment card of Bank of China^{®} is displayed in a display interface of the first payment application, for example, a Bank of China card 7011 shown in the interface 701 of the first payment application Huawei Wallet in FIG. 7(a)-1. Similarly, it is assumed that the second payment application China Merchants Bank^{®} payment application issues a payment card. In this case, a payment card of China Merchants Bank^{®} is displayed in a display interface of the first payment application, for example, a China Merchants Bank card 7012 shown in the interface 701 of the first payment application Huawei Wallet in FIG. 7(a)-1. Similarly, it is assumed that the second payment application Nanjing Transportation^{®} payment application issues a payment card. In this case, the payment card of Nanjing Transportation^{®} is displayed in a display interface of the first payment application, for example, a Nanjing Transportation card 7013 shown in the interface 701 of the first payment application Huawei Wallet in FIG. 7(a)-1.

When the user selects the Bank of China card to perform NFC payment, the interface on the mobile phone 100 changes to an interface 702, and displays an interface of the Bank of China^{®} payment application. The interface 702 displays an issued payment card, and prompts "Bring your mobile phone close to the POS terminal to complete card tapping".

When the mobile phone 100 is brought close to a POS terminal 200 (shown by a process 703 in FIG. 7(a)-3), after payment is completed, the interface on the mobile phone 100 changes to an interface 704 in FIG. 7(a)-3), and displays "Payment succeeded".

Optionally, after payment succeeds, Bank of China^{®} may close a payment page, and the mobile phone 100 changes to display the interface 701 again, and presents the payment card of the first payment application and the payment cards of the second payment applications to the user.

Optionally, after Bank of China^{®} closes the payment page, the mobile phone 100 may further exit the display interface of the current first payment application Huawei Wallet. This is not limited in this embodiment of this application.

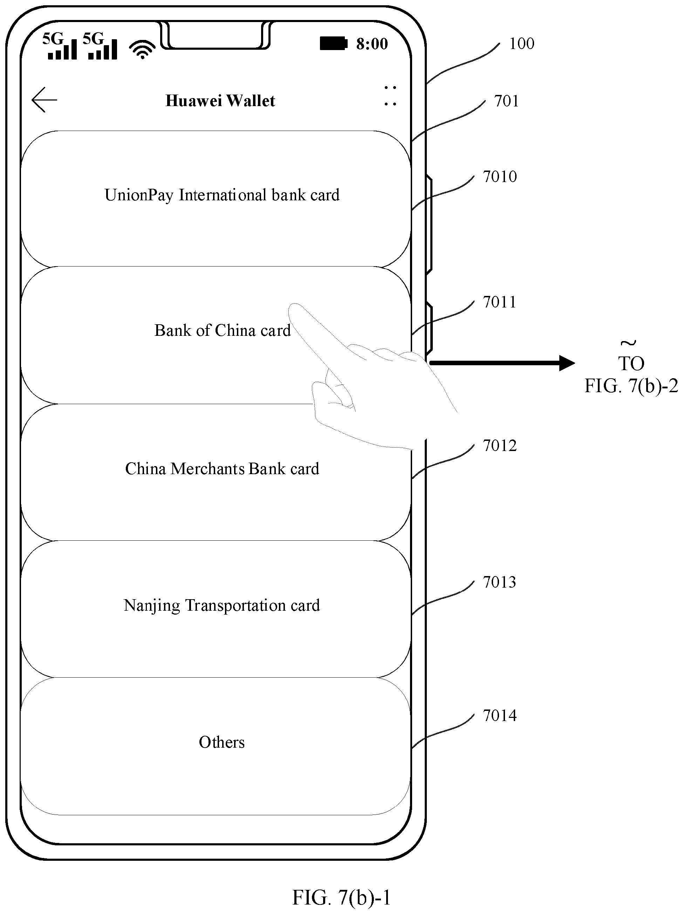

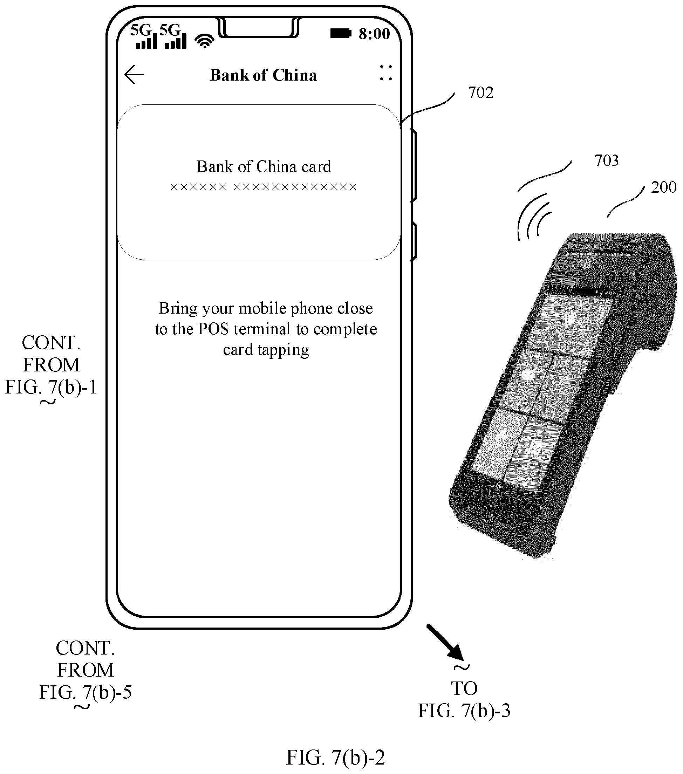

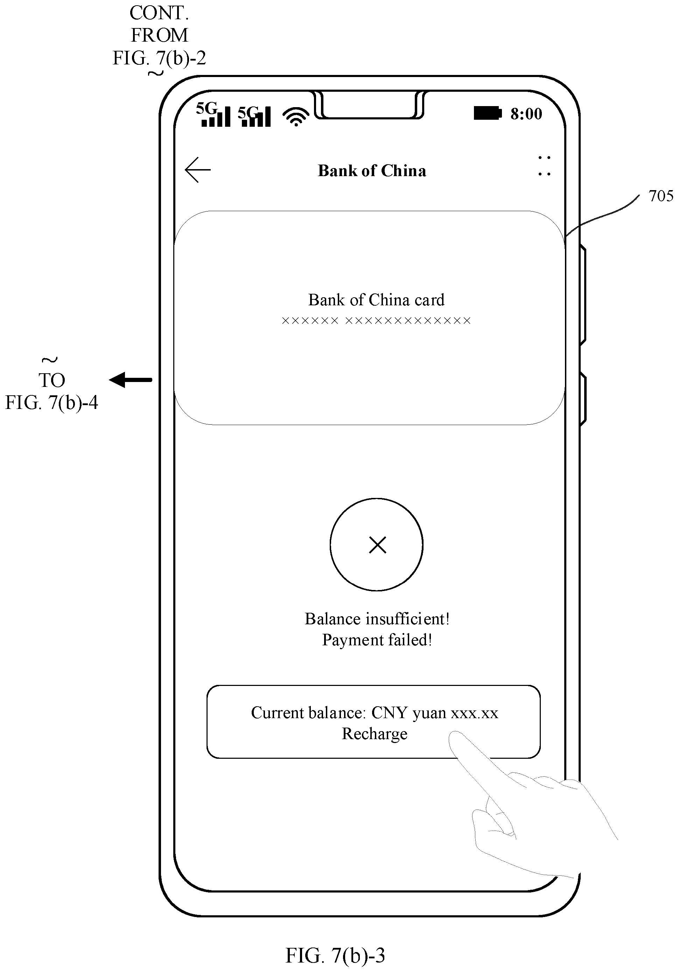

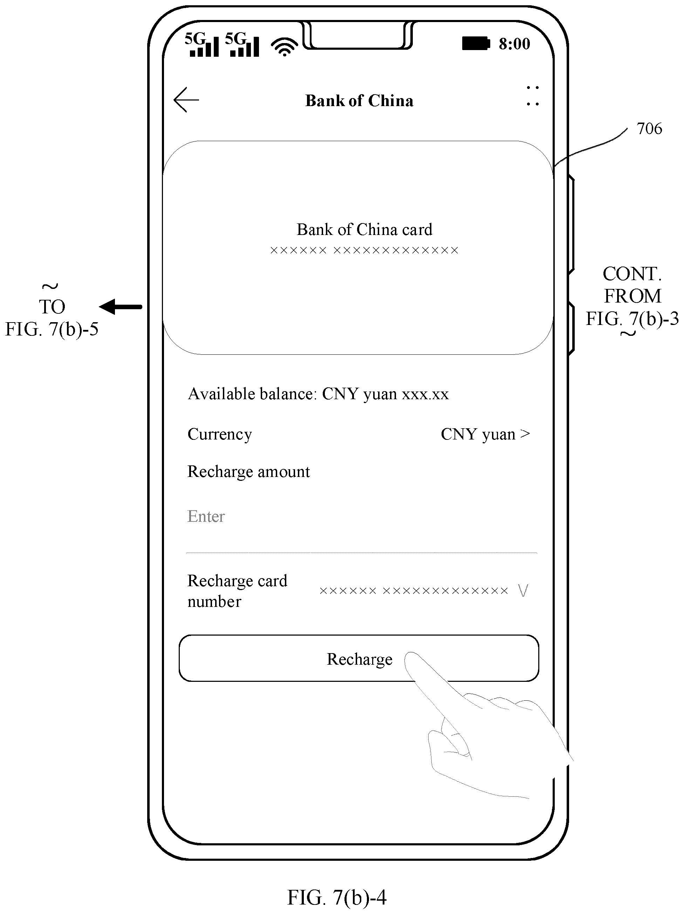

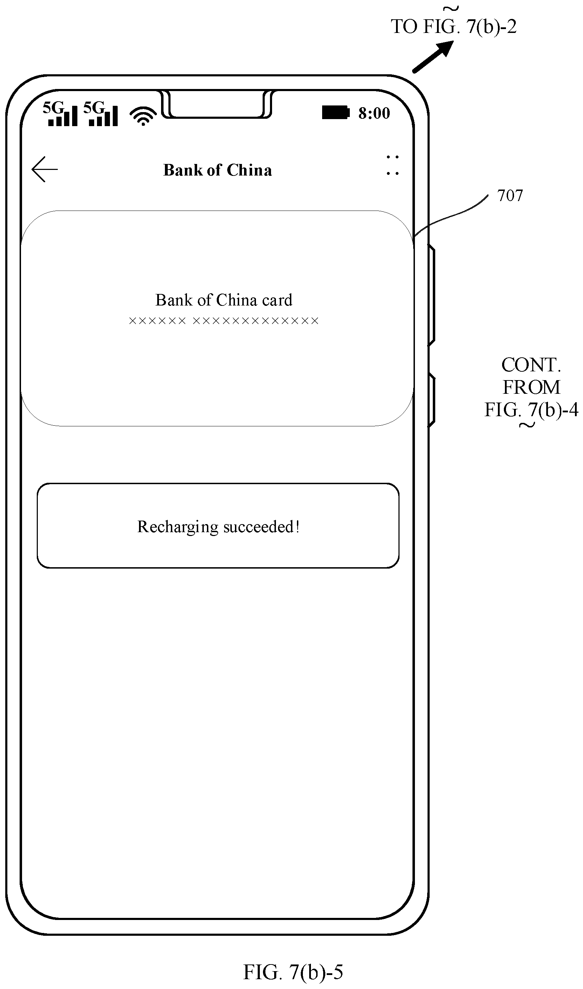

Optionally, in a case of the same first payment application and the same second payment application shown in FIG. 7(a)-1 to FIG. 7(a)-3 , when the user selects the Bank of China card to perform NFC payment but chooses to perform recharging because a balance of the Bank of China card is insufficient, reference may be made to a scenario shown in FIG. 7(b)-1 to FIG.7(b)-5. In FIG. 7(b)-2 and FIG. 7(b)-3, when the mobile phone 100 is brought close to the POS terminal 200 (shown by the process 703 in FIG. 7(b)-2) to perform payment, a balance of the Bank of China card is insufficient, and the interface changes to an interface 705 in FIG. 7(b)-3. The interface prompts "Balance insufficient! Payment failed!", and displays a current balance and a recharge entrance.

It should be noted that the interface 705 merely displays an example of the insufficient balance prompt information, the current balance, and the recharge entrance, and the interface 705 may alternatively be presented in a form of another image or text. This is not limited in this embodiment of this application. In addition, the interface 705 may further include more or fewer display elements. This is not limited in this embodiment of this application either.

When the user chooses to perform recharging, the interface changes to an interface 706 in FIG. 7(b)-4. The user may enter a recharge amount, select a bank card to be recharged, and tap a "Recharge" option to complete recharging. In FIG. 7(b)-4, recharging may be performed in a manner in which another bank card that is issued by Bank of China^{®} and that has an online payment capability transfers money to the Bank of China card shown in the interface 706, or recharging may be performed in another manner. This is not limited in this embodiment of this application. Alternatively, the interface 706 may be presented in a form of another image or text, or may include more or fewer display elements. This is not limited in this embodiment of this application either.

After the user completes recharging, the interface changes to an interface 707, and displays "Recharging succeeded".

After recharging succeeds, the interface may change to the interface 702, and the user may bring the mobile phone 100 close to the POS terminal 200 again (shown by the process 703 in FIG. 7(b)-2), to complete payment.

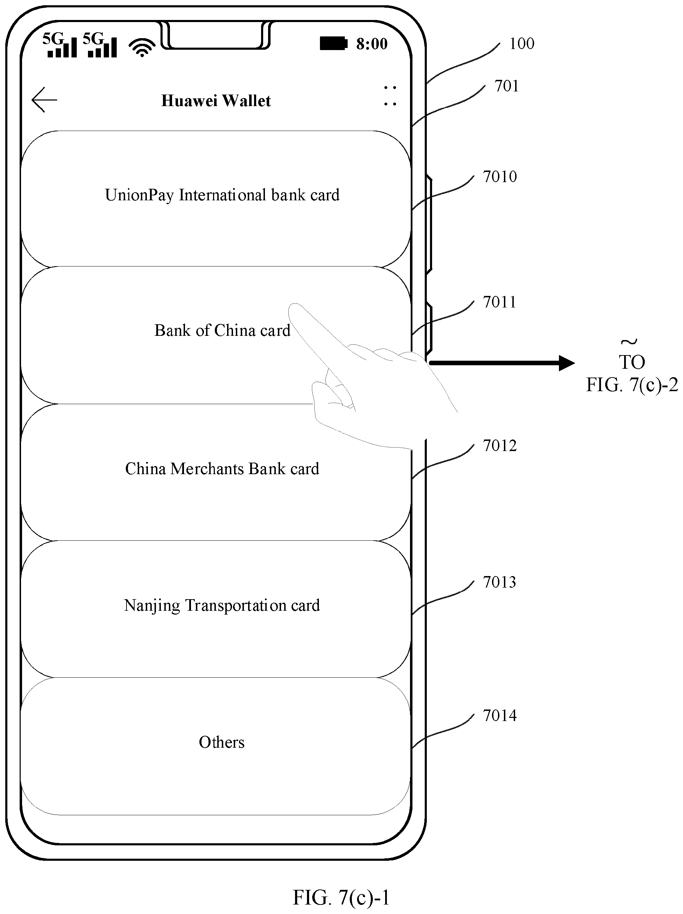

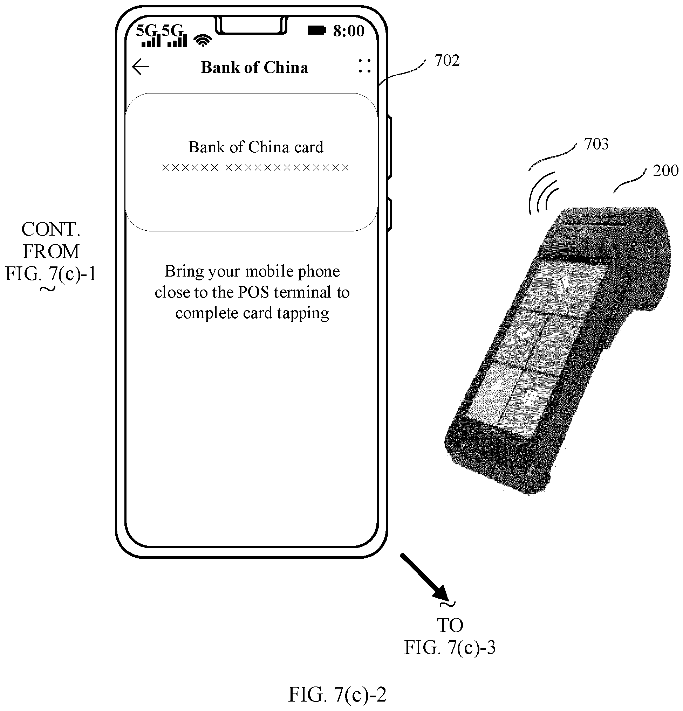

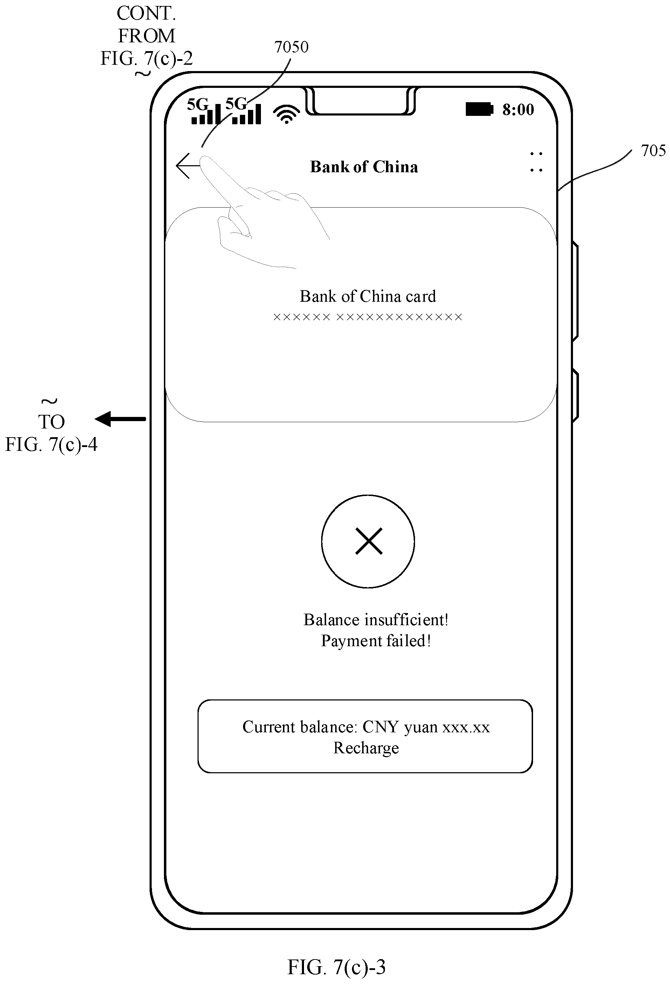

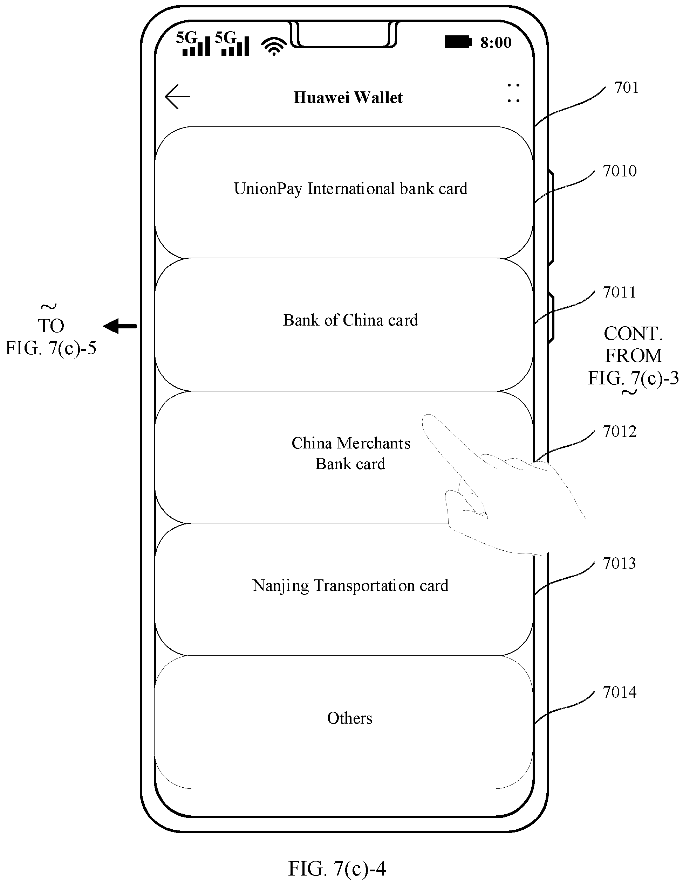

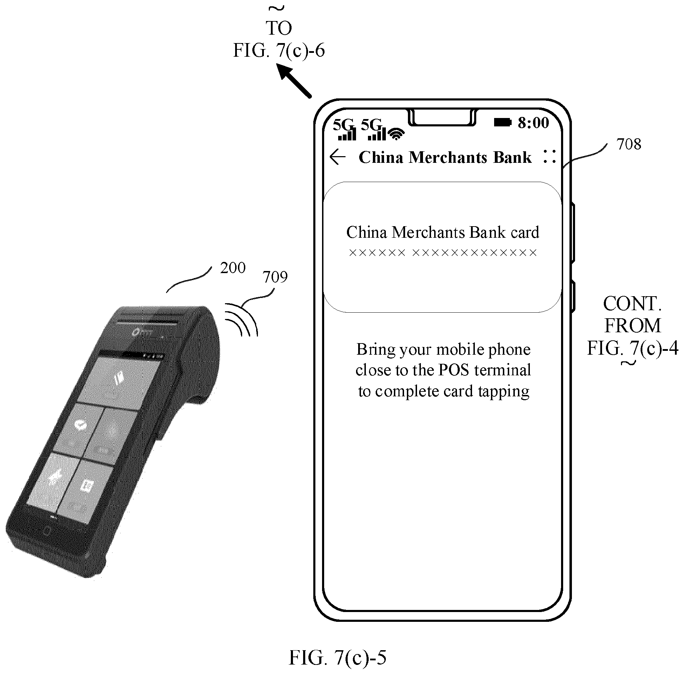

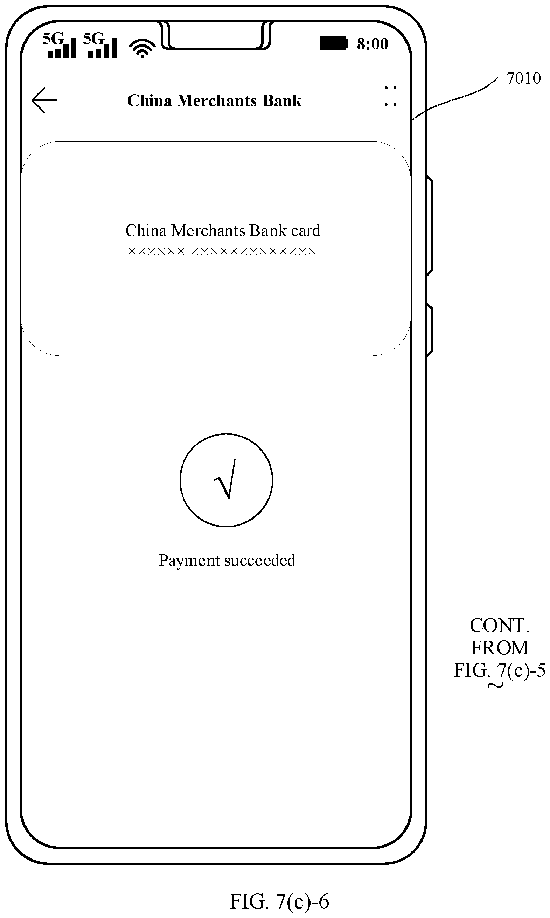

Optionally, in a case of the same first payment application and the same second payment application shown in FIG. 7(a)-1 to FIG. 7(a)-3 , when the user selects the Bank of China card to perform NFC payment but changes a card for payment because a balance of the Bank of China card is insufficient, reference may be made to a scenario shown in FIG. 7(c)-1 to FIG. 7(c)-6. When the user uses an NFC payment function of Huawei Wallet, an interface shown in the interface 701 on the mobile phone 100 in FIG. 7(c)-1 appears. In FIG. 7(c)-2 and FIG. 7(c)-3, when the mobile phone 100 is brought close to the POS terminal 200 (shown by the process 703 in FIG. 7(c)-2) to perform payment, a balance of the Bank of China card is insufficient, and the interface changes to an interface 705 in FIG. 7(c)-3. The interface prompts "Balance insufficient! Payment failed!", and displays a current balance and a recharge entrance. In this case, if the user chooses to change a card for payment instead of recharging the Bank of China card, for example, selects an option 7050 that is in the interface 705 and that is for returning to a previous interface, the interface changes to the interface 701 of the first payment application Huawei Wallet. Then, the user selects the China Merchants Bank card 7012 in the interface 701 to perform NFC payment. The interface on the mobile phone 100 changes to an interface 708, and displays an interface of the China Merchants Bank^{®} payment application. The interface 708 displays an issued payment card, and prompts "Bring your mobile phone close to the POS terminal to complete card tapping".

It should be noted that, in FIG. 7(c)-3, the option 7050 that is for the user to select and that is for returning to the previous interface is merely an example for presentation, and the option 7050 for returning to the previous interface may alternatively be presented in a form of another image or text. This is not limited in this embodiment of this application. In addition, in response to an operation of choosing to return to the previous interface by the user, the interface 705 in FIG. 7(c)-3 directly changes to the interface 701. In another possible implementation, in response to an operation of choosing to return to the previous interface by the user, the interface 705 may first change to the interface 702, and then change to the interface 701 after an operation of choosing to enter the interface 701 is performed by the user. Alternatively, in response to an operation of choosing to return to the previous interface by the user, the interface 705 first changes to a display interface in a specific form, and then changes to the interface 701. This is not limited in this embodiment of this application.

When the mobile phone 100 is brought close to the POS terminal 200 (shown by a process 709 in FIG. 7(c)-5), after payment is completed, the interface on the mobile phone 100 may change to an interface 7010 in FIG. 7(c)-6, and display "Payment succeeded".

Optionally, after payment succeeds, China Merchants Bank^{®} may close the payment page, and the mobile phone 100 changes to display the interface 701 again, and presents the payment card of the first payment application and the payment cards of the second payment applications to the user.

Optionally, after China Merchants Bank^{®} closes the payment page, the mobile phone 100 may further exit the display interface of the current first payment application Huawei Wallet. This is not limited in this embodiment of this application.

Optionally, an application that supports an NFC function but does not have a capability to issue a payment card, for example, Alipay^{®} or WeChat^{®}, may alternatively be set as the first payment application, namely, the default payment application. It should be noted that although Alipay^{®} or WeChat^{®} may be set as the default payment application in the NFC payment setting interface 104 shown in FIG. 1D, because Alipay^{®} or WeChat^{®} do not have the capability to issue a payment card, payment cards cannot be displayed in interfaces of these payment applications.

For example, FIG. 8(a)-1 to FIG. 8(a)-3are a diagram in which an interface changes with a user operation when a mobile phone is used as the first terminal for NFC payment, Alipay^{®} is the first payment application, and the second payment applications are Bank of China^{®} and Nanjing Transportation^{®}.

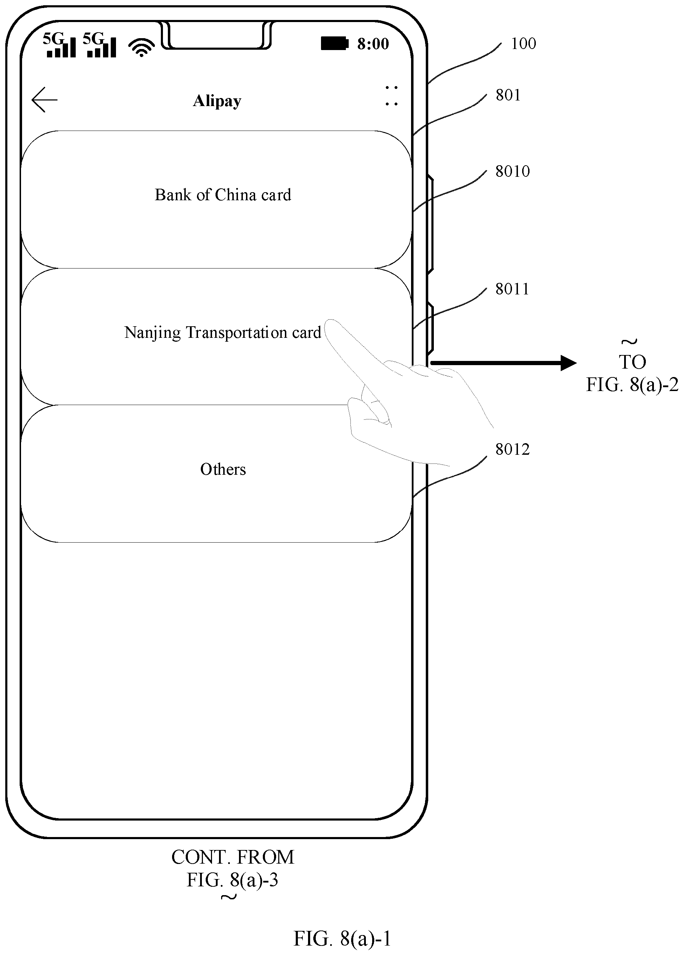

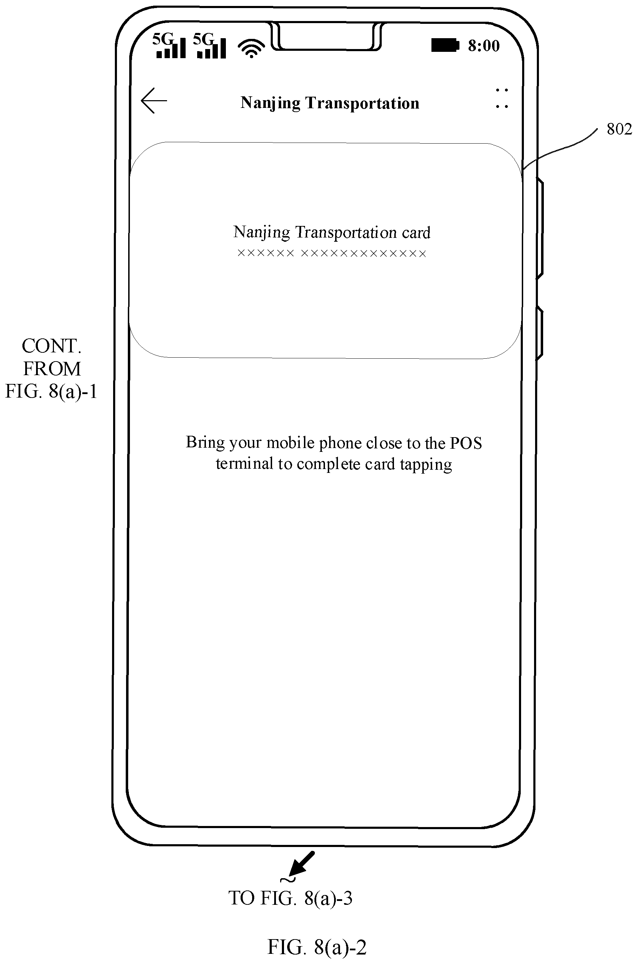

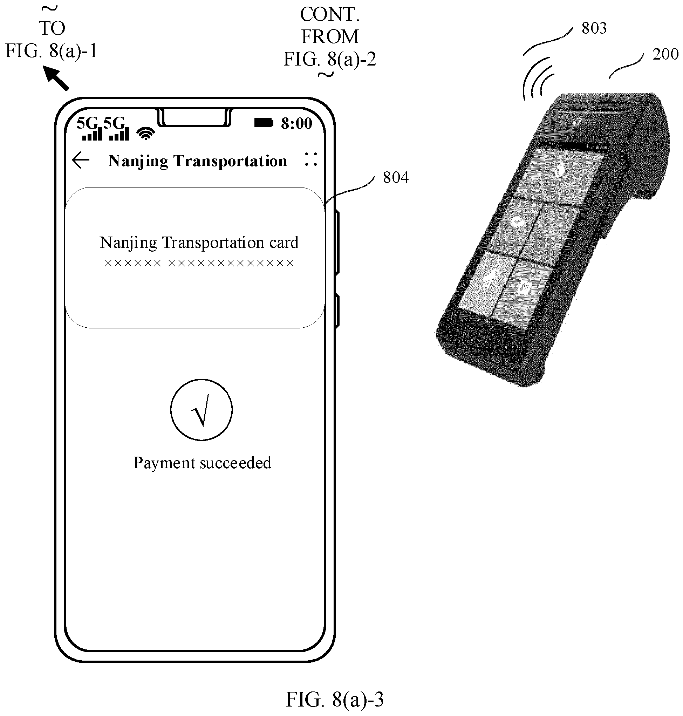

As shown in an interface 801 in FIG. 8(a)-1, it is assumed that the second payment application Bank of China^{®} payment application issues a payment card. In this case, a payment card of Bank of China^{®} is displayed in a display interface of the first payment application, for example, a Bank of China card 8010 shown in the interface 801 of the first payment application Alipay^{®} in FIG. 8(a)-1. Similarly, it is assumed that the second payment application Nanjing Transportation^{®} payment application issues a payment card. In this case, the payment card of Nanjing Transportation^{®} is displayed in a display interface of the first payment application, for example, a Nanjing Transportation card 8011 shown in the interface 801 of the first payment application Alipay^{®} in FIG. 8(a)-1.

When the user selects the Nanjing Transportation card to perform NFC payment, the interface on the mobile phone 100 changes to an interface 802, and displays an interface of the Nanjing transportation^{®} payment application. The interface 802 displays an issued payment card, and prompts "Bring your mobile phone close to the POS terminal to complete card tapping".

When the mobile phone 100 is brought close to the POS terminal 200 (shown by a process 803 in FIG. 8(a)-3 , after payment is completed, the interface on the mobile phone 100 changes to an interface 804 in FIG. 8(a)-3 , and displays "Payment succeeded".

Optionally, after payment succeeds, Nanjing Transportation^{®} may close a payment page, and the mobile phone 100 changes to display the interface 801 again, and presents the payment card of the first payment application and the payment cards of the second payment applications to the user.

Optionally, after Nanjing Transportation^{®} closes the payment page, the mobile phone 100 may further exit the display interface of the current first payment application Alipay^{®}. This is not limited in this embodiment of this application.

Optionally, after NFC payment is completed, if Nanjing Transportation^{®} finds that a balance of the payment card of Nanjing Transportation^{®} is insufficient, for a diagram in which an interface changes with a user operation, refer to FIG. 8(b)-1 to FIG. 8(b)-4.

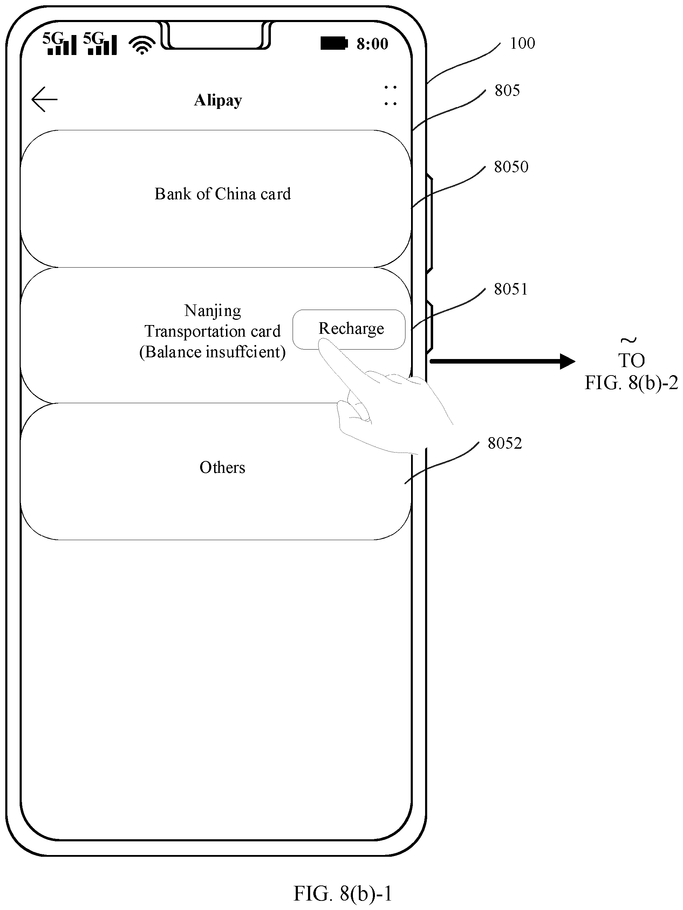

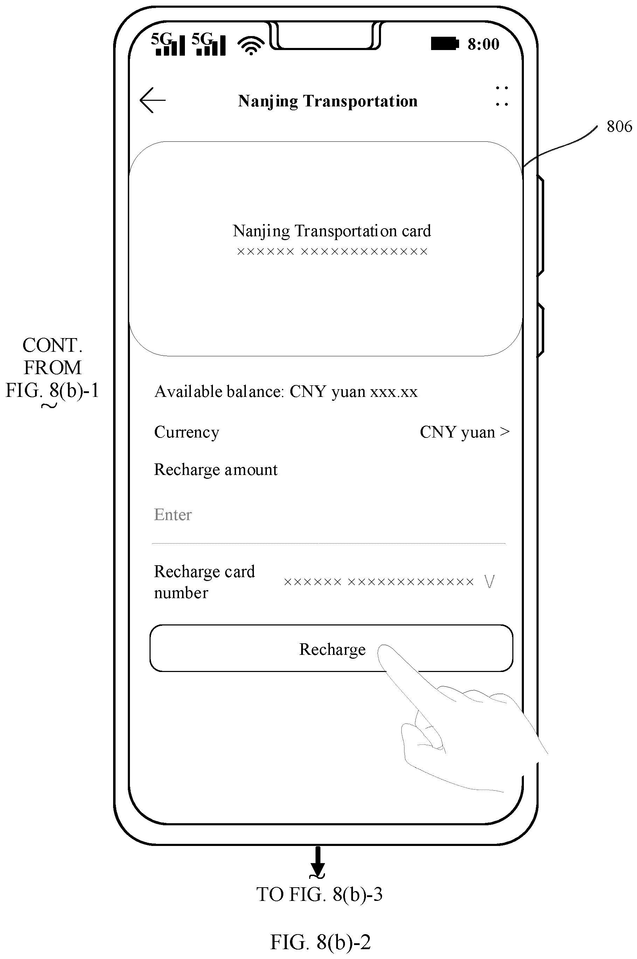

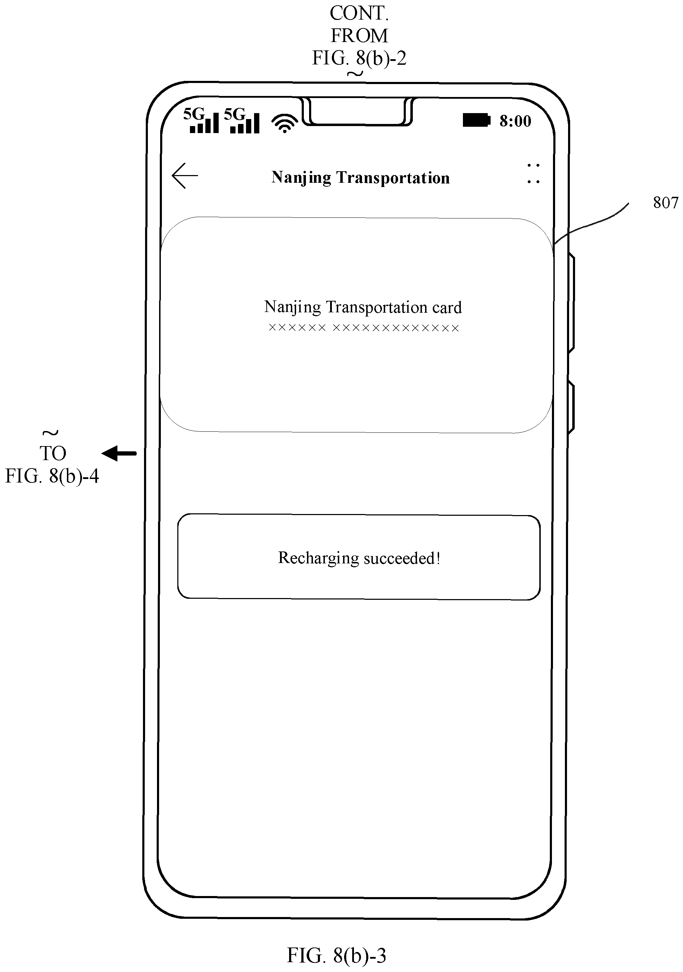

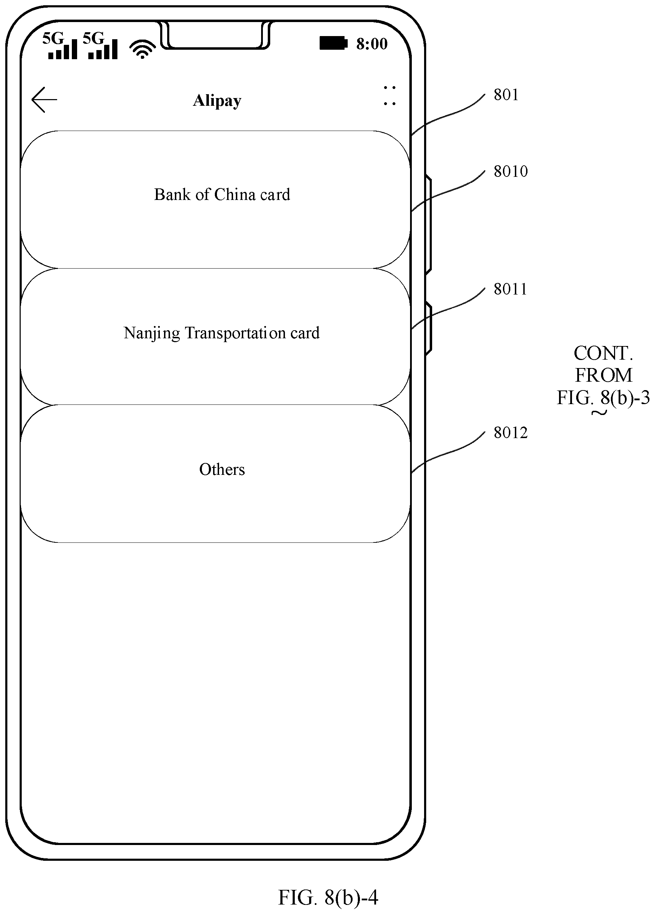

As shown in an interface 805 in FIG. 8(b)-1, a payment card, a Nanjing Transportation card 8051, displays "Balance insufficient", and displays a "Recharge" option. It should be noted that Nanjing Transportation^{®} may determine that the balance of the payment card is insufficient based on that an amount in the card is less than a specific amount threshold. For example, Nanjing Transportation^{®} is mainly used for purposes such as bus card tapping. It is assumed that the amount in the card is less than an amount required for a longest round trip by a bus in the city. In this case, it can be determined that the balance of the payment card is insufficient. Setting of the amount threshold is not limited in this embodiment of this application.

After the user selects a recharge operation in the interface 805, the interface may change to an interface 806. The user may enter a recharge amount, select a bank card to be recharged, and tap a "Recharge" option to complete recharging. In FIG. 8(b)-2, recharging may be performed in a manner in which a bank card having an online payment capability transfers money to the Nanjing Transportation card shown in the interface 806, or recharging may be performed in another manner. This is not limited in this embodiment of this application. Alternatively, the interface 806 may be presented in a form of another image or text, or may include more or fewer display elements. This is not limited in this embodiment of this application either.

After recharging succeeds, the interface is shown as an interface 807, and prompts "Recharging succeeded". Then, optionally, the interface may change to the interface 801 in FIG. 8(b)-4, namely, an NFC payment interface of the first payment application Alipay.

The following specifically describes technical solutions of this application with reference to a specific embodiment. In this embodiment of this application, after one of a plurality of NFC payment applications is selected as a first payment application, namely, a system-default payment application for NFC payment, and a remaining payment application is selected as a second payment application, namely, a non-system-default payment application for NFC payment, the second payment application issues a second payment card. The first payment application obtains a second payment card snapshot of the second payment application. The second payment card of the second payment application is displayed in an NFC payment interface of the first payment application in response to an operation of opening the NFC payment interface by a user. The first payment application displays a payment interface of the second payment application based on the second payment card snapshot of the second payment application in response to an operation of selecting the second payment card of the second payment application by the user. The second payment application interacts with a second terminal to complete payment. According to this embodiment of this application, a complex operation of switching a default payment application for NFC payment by a user can be avoided. This brings convenience to the user.

FIG. 9A and FIG. 9B are a flowchart of an NFC payment method according to an embodiment of this application. The NFC payment method includes the following steps.

S901: A second payment application issues a second payment card.

The second payment application is a non-system-default payment application for NFC payment, and the payment card is a virtual card that has a capability to perform a payment transaction by using an NFC payment capability, for example, a virtual bank card generated by binding a physical bank card to a terminal, or a transportation card that is issued by Nanjing Transportation^{®} and that can be used to pay for transportation riding.

It should be noted that the second payment application is an application that supports an NFC function and has a capability to issue a payment card.

Optionally, when a first payment application is also an application that supports an NFC function and has a capability to issue a payment card, step S902 may also be performed.

S902: The first payment application issues a first payment card.

Optionally, after the first payment application issues the first payment card, the first payment card is displayed in an NFC payment interface of the first payment application in response to an operation of opening the NFC payment interface by a user.

For example, as shown in FIG. 7(a)-1, Huawei Wallet is the first payment application. As an application that is provided by a system and that supports an NFC function, Huawei Wallet can issue a payment card. For example, Huawei Wallet shown in FIG. 7(a)-1 issues a UnionPay International bank card, for example, the UnionPay International bank card 7010 displayed in the interface 701.

In addition, the first payment application may alternatively be an application that supports an NFC function but does not have a capability to issue a payment card, for example, Alipay^{®} or WeChat^{®}. Because Alipay^{®} or WeChat^{®} does not have the capability to issue a payment card, step S902 does not need to be performed.

It should be noted that step S902 and step S901 may be simultaneously performed, or step S902 may be performed before or after step S901. This is not limited in this embodiment of this application.

S903: The first payment application obtains a second payment card snapshot of the second payment application.

The second payment card snapshot of the second payment application includes a link for jumping to a payment interface of the second payment card. The second payment card snapshot may further include information such as a second payment card identifier ID, a card face image, and a link for jumping to a recharge interface of the second payment card.

Specifically, the first payment application may request to obtain the second payment card snapshot of the second payment application, and the second payment application sends the second payment card snapshot of the second payment application to the first payment application.

For example, it is assumed that the first payment application is Huawei Wallet, the second payment application is Bank of China^{®}, and Bank of China issues a payment card, namely, the Bank of China card shown in the interface 702 in FIG. 7(a)-2. In this case, in step S903, Huawei Wallet may request to obtain a payment card snapshot of the Bank of China card of Bank of China^{®}, and Bank of China' sends the card snapshot of the Bank of China card to Huawei Wallet.

S904: The first payment application displays the second payment card of the second payment application in an NFC payment interface of the first payment application in response to an operation of opening the NFC payment interface by the user.

It should be noted that, in step S903, the first payment application obtains the second payment card snapshot of the second payment application, so that information such as the card face image in the second payment card snapshot of the second payment application may be displayed in step S904.

For example, when the user opens the NFC payment interface of the first payment application Huawei Wallet, as shown in the interface 701 of the mobile phone 100 in FIG. 7(a)-1, in addition to the payment card, the UnionPay International bank card, of the first payment application Huawei Wallet, the cards of the second payment applications, including the payment card, the Bank of China card, of Bank of China^{®}, the payment card, the China Merchants Bank card, of China Merchants Bank^{®}, and the payment card, Nanjing Transportation card, of Nanjing Transportation^{®}, are also displayed.

FIG. 8(a)-1 is also used as an example. As shown in the interface 801 of the mobile phone 100 in FIG. 8(a)-1, the first payment application is Alipay^{®}, the payment card, the Bank of China card, of the second payment application Bank of China^{®} and the payment card, the Nanjing Transportation card, of the second payment application Nanjing Transportation^{®} are displayed in the NFC payment interface of the first payment application Alipay^{®}.

Optionally, after step S904 is performed, the first payment application may further perform steps S905 and S906.

S905: The first payment application obtains a status of a foreground payment application setting switch of an NFC payment setting of a first terminal.

The foreground payment application setting switch is used to control a function of prioritizing a foreground application to be enabled or disabled, and the function of prioritizing the foreground application is for using a payment application located in a current display interface as a preferred payment application. For example, in an initial scenario, in the interface 701 of the mobile phone 100 shown in FIG. 7(a)-1, the first payment application Huawei Wallet is a foreground payment application. For another example, in the interface 702 of the mobile phone 100 shown in FIG. 7(a)-2, when the second payment application Bank of China^{®} is run in a current display interface, Bank of China^{®} is the foreground payment application.

S906: If the foreground payment application setting switch is not turned on, the first payment application sets the foreground payment application setting switch to an on state.

It should be noted that the foreground payment application setting switch is set to the on state, so that the foreground payment application can be switched when the foreground payment application changes in the following steps. For example, the interface 701 of the mobile phone 100 in FIG. 7(a)-1 displays the NFC payment interface of the first payment application Huawei Wallet. In this case, the foreground payment application is Huawei Wallet by default. If the user selects the Bank of China card to perform payment, the foreground payment application needs to be switched to Bank of China^{®}. To complete switching the foreground payment application, the foreground payment application setting switch needs to be turned on.

Specifically, a setting capability to prioritize the foreground application in the user program framework is invoked, so that the foreground payment application setting switch is turned on, and prioritizing a foreground application means preferentially using a currently running program. In step S906, the capability may be invoked in a background. The Android^{®} system is used as an example. The user program framework may invoke a CardEmulation. category AllowsForegroundPreference(CardEmulation.CATEGORY_PAYMENT) function in an android.nfc.cardemulation package to enable prioritizing the foreground application, that is, turn on the foreground payment application setting switch.

In addition, if the first payment application has explicitly turned on the foreground payment application setting switch before steps S905 and S906 are performed, steps S905 and S906 do not need to be performed. As shown in the interface 602 in FIG. 6B, if the user chooses to enable "Prioritize the foreground application" in the NFC payment setting interface 602, that is, turns on the foreground payment application setting switch, steps S905 and S906 do not need to be performed.

S907: The first payment application displays a payment interface of the second payment application based on the second payment card snapshot of the second payment application in response to an operation of selecting the second payment card of the second payment application by the user.

More specifically, in steps S902 and S903, the first payment application obtains the second payment card snapshot of the second payment application, where the second payment card snapshot includes the link for jumping to the payment interface of the second payment card, and the first payment application displays the payment interface of the second payment application by using the link that is to the payment interface of the second payment card and that is carried in the second payment card snapshot of the second payment application.

It should be noted that when the second payment application is displayed, the second payment application invokes a system registration interface to register, with the system, a component related to the payment interface of the second payment application and a service capability to process an NFC instruction. After receiving registration information, the system temporarily switches the system-default payment application (namely, the first payment application) of the system to the second payment application in this registration.

Specifically, the Android^{®} system is used as an example. The second payment application may be jumped to by using an Intent. Sample code is as follows: $Intent launchIntent = new Intent \left(Intent.ACTION_VIEW\right) ;$
launchIntent.setPackage("a link to a payment interface of a second payment card of a second payment application");
launchIntent.setData(Uri.parse("an entrance of the payment interface of the second payment card of the second payment application"));

The first payment application displays the payment interface of the second payment application based on the second payment card snapshot of the second payment application by using an existing capability of the Android^{®} system, which is implemented by using the foregoing Uri class. For specific details, refer to a conventional technology.

When the second payment application is displayed, the second payment application invokes CardEmulation.setPreferredService in the android.nfc.cardemulation package to inject an Activity, and registers a HostApduService implementation class. Activity is a basic application component in the Android^{®} system and may be used by the user to perform interaction to complete a specific task. HostApduService is a convenient Service class that can be extended to implement an NFC card emulation mode in an Android^{®} component. After receiving registration information, the Android^{®} system temporarily switches an NFC route used to point to performing NFC payment to the second payment application in this registration. The NFC route is path information that guides NFC packet forwarding, and a path for forwarding an IP packet may be determined by using the route. It should be understood that an existing capability of the Android^{®} system is invoked in the registration process of the second payment application. Details are not described again in this embodiment of this application.

In the interface 701 of the mobile phone 100 shown in FIG. 7(a)-1, when the user selects the Bank of China card to perform NFC payment, the second payment application Bank of China^{®} is displayed, and Bank of China^{®} registers, with the system, a component related to the payment interface of Bank of China^{®} and a service capability to process an NFC instruction. After receiving registration information, the system temporarily switches the system-default payment application Huawei Wallet to the second payment application Bank of China^{®} in this registration.

S908: The second payment application displays the payment interface.

Refer to FIG. 7(a)-2. The interface 702 of the mobile phone 100 is the payment interface of the second payment application Bank of China^{®}. The interface displays an issued payment card, and prompts "Bring your mobile phone close to the POS terminal to complete card tapping".

As shown in the interface 802 in FIG. 8(a)-2, the payment interface of the second payment application Nanjing Transportation^{®} is displayed.

Optionally, after step S908 is performed, the second payment application may further perform optional steps S909 to S911.

S909: The second payment application interacts with a second terminal, and displays prompt information indicating that a balance is insufficient.

Refer to FIG. 7(b)-2 and FIG. 7(b)-3. When the mobile phone 100 is brought close to the POS terminal 200 (shown by the process 703 in FIG. 7(b)-2) to perform payment, the balance of the Bank of China card is insufficient, and the interface changes to the interface 705 in FIG. 7(b)-3. The interface displays prompt information "Balance insufficient! Payment failed!", and displays a current balance and a recharge entrance.

In a possible implementation, the displayed prompt information indicating that the balance is insufficient may include more or fewer display elements than those in the interface 705 in FIG. 7(b)-3or a display element different from those in the interface 705 in FIG. 7(b)-3.

S910: The second payment application displays a recharge interface of the second payment application in response to an operation of choosing, by the user, to perform recharging.

Refer toFIG. 7(b)-3 and FIG. 7(b)-4. When the user chooses to perform recharging in the interface 705, the interface changes to the interface 706 shown in FIG. 7(b)-4. The user may enter a recharge amount, select a bank card to be recharged, and tap a recharge option to complete recharging.

In a possible implementation, recharging may be performed in a manner in which another payment card that is issued by the second payment application and that has an online payment capability transfers money to a currently displayed payment card, or recharging may be performed in another manner. This is not limited in this embodiment of this application.

In addition, the recharge interface of the second payment application may include more or fewer display elements than those in the interface 706 in FIG. 7(b)-4 or a display element different from those in the interface 706 inFIG. 7(b)-4. This is not limited in this embodiment of this application.

S911: The second payment application displays a recharge completed interface of the second payment application in response to an operation of completing, by the user, recharging.

For example, as shown in FIG. 7(b)-4 and FIG. 7(b)-5, after the user taps the recharge option in the interface 706 and successfully performs recharging, the interface changes to the interface 707, and prompts "Recharging succeeded".

After recharging succeeds, the interface on the mobile phone 100 may change to the interface 702 as shown in FIG. 7(b)-2, to facilitate payment completion.

In some embodiments, after the second payment application interacts with the second terminal and presents, to the user, the prompt information indicating that the balance is insufficient, the second payment application may display the NFC payment interface of the first payment application in response to an operation of changing a card for payment by the user. The first payment application displays a payment interface of a reselected second payment application based on a second payment card snapshot of the reselected second payment application in response to an operation of reselecting the second payment card of a second payment application by the user.

Refer to FIG. 7(c)-2 and FIG. 7(c)-3. When the mobile phone 100 is brought close to the POS terminal 200 (shown by the process 703 in FIG. 7(c)-2) to perform payment, the balance of the Bank of China card is insufficient. The interface 705 prompts "Balance insufficient! Payment failed!", and displays a current balance and a recharge entrance. In this case, the user may choose to change a card for payment. For example, if the user selects the option 7050 that is in the interface 705 and that is for returning to the previous interface, the interface changes to the interface 701 of the first payment application Huawei Wallet.

It should be noted that, before the interface changes to the interface 701 of the first payment application Huawei Wallet, a secondary application needs to invoke, in the background, a system unregistration interface to unregister, from the system, the component related to the payment interface of the second payment application Bank of China^{®} and the service capability to process the NFC instruction that are registered. After the system receives unregistration information, the first payment application Huawei Wallet is restored to a current payment application for NFC payment.

More specifically, the second payment application Bank of China^{®} invokes CardEmulation. unsetPreferredService in the android.nfc.cardemulation package to uninject the Activity, and unregisters the HostApduService implementation class. After receiving unregistration information, the system switches the NFC route used to point to performing NFC payment back to the first payment application, and enables the first payment application Huawei Wallet to invoke CardEmulation.setPreferredService in the android.nfc.cardemulation package to inject an Activity, and register a HostApduService implementation class.

It should be noted that, in FIG. 7(c)-3, the option 7050 that is for the user to select and that is for returning to the previous interface is merely an example for presentation, and the option 7050 for returning to the previous interface may alternatively be presented in a form of another image or text. This is not limited in this embodiment of this application.

Then, the user selects the China Merchants Bank card 7012 in the interface 701 to perform NFC payment. The interface on the mobile phone 100 changes to an interface 708, and displays an interface of the China Merchants Bank^{®} payment application. The interface 708 displays an issued payment card, and prompts "Bring your mobile phone close to the POS terminal to complete card tapping".

More specifically, similar to Bank of China^{®} in the interface 702, the interface of China Merchants Bank^{®}, when being displayed, invokes CardEmulation.setPreferredService in the android.nfc.cardemulation package to inject an Activity, and registers a HostApduService implementation class.

In addition, in FIG. 7(c)-3 and FIG. 7(c)-4, the interface 705 directly changes to the interface 701 in response to a selection operation of the user. In another possible implementation, the interface 705 may first change to the interface 702 in response to a selection operation of the user, and then change to the interface 701 after a selection operation of the user. Alternatively, in response to a selection operation of the user, the interface 705 first changes to a display interface in a specific form and then changes to the interface 701. This is not limited in this embodiment of this application.

S912: The second payment application interacts with the second terminal to complete payment.

Optionally, from a perspective of visibility to the user, that the second payment application interacts with the second terminal includes that the first terminal on which the second payment application is located touches the second terminal. Specifically, that the first terminal touches the second terminal means that a distance between the first terminal and the second terminal is within a communication distance specified by the NFC protocol, and that the first terminal and the second terminal can perform NFC communication.

For the user, that the first terminal touches the second terminal is only a simple action such as "tapping" and lasts for a very short time. However, the first terminal and the second terminal actually go through NFC interaction processes such as that the first terminal establishes NFC connection to the second terminal, radio frequency (Radio Frequency) discovery, that the first terminal receives a money receiving instruction sent by the second terminal, and that the first terminal responds to the money receiving instruction. For an NFC payment procedure, refer to the conventional technology. Details are not described again in this embodiment of this application.

Optionally, in a possible implementation, when the second payment application interacts with the second terminal, the second payment application may further prompt the user to perform identity verification. After the identity verification succeeds, the second payment application is used to complete NFC payment. A manner of prompting the user to perform identity verification includes: displaying fingerprint recognition area prompt information to prompt the user to perform fingerprint recognition in the fingerprint recognition area; and after fingerprint recognition succeeds, performing NFC payment by using the second payment application. The manner further includes: prompting to enter a password, prompting the user to input a specific gesture, prompting the user to input voice information, and the like.

Optionally, whether the second payment application performs identity verification on the user is determined by the second payment application based on a current transaction amount. When the transaction amount is relatively large and exceeds a specific quota, the user is prompted to perform identity verification. When the transaction amount is relatively small and is less than a given quota, there is no need to prompt the user to perform identity verification. Certainly, whether the user is required to perform identity verification may alternatively be determined based on information such as a time and a location of this transaction. For example, a method such as big data analytics is used in advance to obtain, through statistics collection, a time range or a location range within which the user usually performs a transaction, the time range is set as a secure time range, and the location range is set as a secure location range. In this case, if a current transaction time is within the secure time range or a current location is within the secure location range, the user is not required to perform identity verification. Otherwise, the user is prompted to perform identity verification.

Optionally, after the second payment application interacts with the second terminal to complete NFC payment, the second payment application prompts the user that NFC payment is completed. The prompting manner may be displaying information, such as prompt information and a payment amount, on the second payment application, may be prompting by using an SMS message, or may be prompting in another manner of voice, vibration, or the like. The prompting manner is not limited in this embodiment of this application.

For example, as shown in FIG. 7(a)-1 to FIG. 7(a)-3, the first terminal is the mobile phone 100, and the second terminal is the POS terminal. When the mobile phone 100 is brought close to the POS terminal 200 (shown by the process 703 in FIG. 7(a)-3, the second payment application Bank of China^{®} interacts with the POS terminal to complete payment. Then, the interface changes to the interface 704, and displays "Payment succeeded".

For another example, in FIG. 8(a)-1 to FIG. 8(a)-3, the first terminal is the mobile phone 100, and the second terminal is the POS terminal. When the mobile phone 100 is brought close to the POS terminal 200 (shown by the process 803 in FIG. 8(a)-3), the second payment application Nanjing Transportation^{®} interacts with the POS terminal to complete payment. Then, the interface changes to the interface 804, and displays "Payment succeeded".

It should be noted that, from a perspective of visibility to the user, only "Payment succeeded" is displayed after the second payment application successfully performs payment. However, the second payment application further needs to perform a series of operations in the background: The second payment application invokes the system unregistration interface to unregister, from the system, the component related to the payment interface of the second payment application and the service capability to process the NFC instruction that are registered in step S907. After the system receives unregistration information, the first payment application is restored to a current payment application for NFC payment.

More specifically, the second payment application invokes CardEmulation. unsetPreferredService in the android.nfc.cardemulation package to uninject the Activity, and unregisters the HostApduService implementation class. After receiving unregistration information, the system switches the NFC route used to point to performing NFC payment back to the first payment application, and enables the first payment application to invoke CardEmulation.setPreferredService in the android.nfc.cardemulation package to inject an Activity, and register a HostApduService implementation class.

For example, in the scenario shown in FIG. 7(a)-3, after the interface 704 is displayed, the second payment application Bank of China^{®} invokes, in the background, the system unregistration interface to unregister, from the system, the component related to the payment interface of Bank of China^{®} and the service capability to process the NFC instruction that are registered. After receiving unregistration information, the system restores the system-default payment application to Huawei Wallet.

For another example, in the scenario shown in FIG. 8(a)-3, after the interface 804 is displayed, the second payment application Nanjing Transportation^{®} closes the payment interface, and invokes, in the background, the system unregistration interface to unregister, from the system, the component related to the payment interface of Nanjing Transportation^{®} and the service capability to process the NFC instruction that are registered. After receiving unregistration information, the system restores the system-default payment application to Huawei Wallet.

Optionally, after payment is completed, step S913 may be further performed.

S913: The second payment application closes the payment interface.

Optionally, after step S913 is performed, step S914 may be further performed.

S914: The first payment application displays the second payment card of the second payment application in the NFC payment interface.

Refer to FIG. 7(a)-3. After the second payment application Bank of China^{®} closes the interface 704, the interface is restored to the interface 701. For another example, as shown in FIG. 8(a)-3, after the second payment application Nanjing Transportation^{®} closes the interface 804, the interface is restored to the interface 801.

Optionally, after performing step S913, the second payment application may further perform optional steps S1001 to S1007.

S1001: The second payment application provides the first payment application with a message indicating that the balance of the second payment card is insufficient.

S1002: The first payment application receives the message indicating that the balance of the second payment card is insufficient, and displays, in the NFC payment interface of the first payment application, information indicating that the balance of the second payment card is insufficient.

Refer to the interface 805 in FIG. 8(b)-1. The second payment application Nanjing Transportation^{®} sends a message indicating that the balance of the payment card of the second payment application Nanjing Transportation^{®} is insufficient to the first payment application Alipay^{®}, and the first payment application Alipay^{®} displays "Balance insufficient" in the Nanjing Transportation card in the NFC payment interface of the first payment application Alipay^{®}, and displays the "Recharge" option.

It should be noted that Nanjing Transportation^{®} may determine that the balance of the payment card is insufficient based on that an amount in the card is less than a specific amount threshold. For example, Nanjing Transportation^{®} is mainly used for purposes such as bus card tapping. It is assumed that the amount in the card is less than an amount required for a longest round trip by a bus in the city. In this case, it can be determined that the balance of the payment card is insufficient. Setting of the amount threshold is not limited in this embodiment of this application.

S1003: The first payment application displays the recharge interface of the second payment application based on the second payment card snapshot in response to an operation of choosing, by the user, to recharge the second payment card.

It should be noted that, from a perspective of visibility to the user, displaying the recharge interface of the second payment application is merely changing the interface to the recharge interface of the second payment application. However, actually, the first payment application displays the recharge interface of the second payment application by using the link that is to the recharge interface of the second payment card and that is carried in the second payment card snapshot (obtained through steps S902 and S903) of the second payment application.

Specifically, the Android^{®} system is used as an example. The recharge interface of the second payment application may be jumped to by using an Intent. Sample code is as follows: $Intent launchIntent = new Intent \left(Intent.ACTION_VIEW\right) ;$
launchIntent.setPackage("a link to a recharge interface of a second payment card of a second payment application");
launchIntent.setData(Uri.parse("an entrance of the recharge interface of the second payment card of the second payment application"));

The first payment application displays the recharge interface of the second payment application based on the second payment card snapshot by using an existing capability of the Android^{®} system, which is implemented by using the foregoing Uri class. For specific details, refer to a conventional technology.

When the second payment application is displayed, the second payment application invokes CardEmulation.setPreferredService in the android.nfc.cardemulation package to inject an Activity, and registers a HostApduService implementation class. After receiving registration information, the Android^{®} system temporarily switches an NFC route used to point to performing NFC payment to the second payment application in this registration. It should be understood that an existing capability of the Android^{®} system is invoked in the registration process of the second payment application. Details are not described again in this embodiment of this application.

S1004: The second payment application displays the recharge interface.

For example, in the recharge interface shown in the interface 806 in FIG. 8(b)-2, the user may enter a recharge amount, and tap the "Recharge" option to complete recharging. In FIG. 8(b)-2, recharging may be performed in a manner in which a bank card having an online payment capability transfers money to the Nanjing Transportation card shown in the interface 806, or recharging may be performed in another manner. This is not limited in this embodiment of this application. Alternatively, the interface 806 may be presented in a form of another image or text, or may include more or fewer display elements. This is not limited in this embodiment of this application either.

S1005: The second payment application displays the recharge completed interface of the second payment application in response to an operation of completing, by the user, recharging in the recharge interface of the second payment application.

As shown in the interface 807 in FIG. 8(b)-3, the second payment application Nanjing Transportation^{®} displays "Recharging succeeded!". Alternatively, the interface 807 may be presented in a form of another image or text, or may include more or fewer display elements. This is not limited in this embodiment of this application either.

It should be noted that, from a perspective of visibility to the user, only "Recharging succeeded" is displayed after the second payment application performs recharging successfully, but the second payment application further needs to perform a series of operations in the background. The second payment application invokes the system unregistration interface to unregister, from the system, the component related to the payment interface of the second payment application and the service capability to process the NFC instruction that are registered in step S1003. After the system receives unregistration information, the first payment application is restored to a current payment application for NFC payment.

More specifically, the second payment application invokes CardEmulation. unsetPreferredService in the android.nfc.cardemulation package to uninject the Activity, and unregisters the HostApduService implementation class. After receiving unregistration information, the system switches the NFC route used to point to performing NFC payment back to the first payment application, and enables the first payment application to invoke CardEmulation.setPreferredService in the android.nfc.cardemulation package to inject an Activity, and register a HostApduService implementation class.

Optionally, after step S1005 is performed, step S1006 may be further performed.

S 1006: The second payment application closes the recharge completed interface of the second payment application.

Optionally, after step S1006 is performed, step S1007 may be further performed.

S1007: The first payment application displays the second payment card of the second payment application in the NFC payment interface.

For example, in FIG. 8(b)-3and FIG. 8(b)-4, after the second payment application Nanjing Transportation^{®} closes the recharge interface, the interface is restored to the interface 801, and the payment card is displayed in the first payment application Alipay^{®}.

The foregoing mainly describes the solutions provided in embodiments of this application from a perspective of interaction between network elements. It may be understood that, to implement the foregoing functions, the network elements, such as the first terminal, the second terminal, the first payment application, and the second payment application, include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first terminal, the second terminal, and the like, may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In actual implementation, another division manner may be used.

When an integrated unit is used, FIG. 11 is a possible diagram of a structure of a first terminal in the foregoing embodiments. The first terminal 1100 includes a processing module 1102, a communication module 1103, and a display module 1104. The display module 1104 is configured to support the first terminal 1100 in displaying specific information. For example, the display module 1104 is configured to support the first terminal 1100 in performing processes S904, S908, S909, S910, S911, and S914 in FIG. 9A and FIG. 9B. The display module 1104 is further configured to support the first terminal 1100 in performing processes S1002, S1004, S1005, and S1007 in FIG. 10. The processing module 1102 is configured to control and manage an action of the first terminal 1100. For example, the processing module 1102 is configured to support the first terminal 1100 in performing processes S901, S902, S903, S905, S906, S907, S912, and S913 in FIG. 9A and FIG. 9B, processes S1003 and S1006 in FIG. 10, and/or another process of the technology described in this specification. The communication module 1103 is configured to support communication between the first payment application and the second payment application in the first terminal 1100. For example, the communication module 1103 is configured to support the first terminal in performing the process S907 in FIG. 9A and the process S1001 in FIG. 10. The communication module 1103 is further configured to support communication with another network entity, for example, communication with the second terminal. The first terminal 1100 may further include a storage module 1101 configured to store program code and data of the first terminal.

The processing module 1102 may be a processor or a controller, such as a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processor may implement or execute various example logical blocks, modules, and circuits described with reference to content disclosed in this application. Alternatively, the processor may be a combination for implementing a computing function, for example, a combination of one or more microprocessors, or a combination of a DSP and a microprocessor. The communication module 1103 may be a transceiver, a transceiver circuit, a communication interface, or the like. The display module 1104 may be any type of display, or the like. The storage module 1101 may be a memory.

When the processing module 1102 is a processor, the communication module 1103 is a transceiver, the display module 1104 is a display, and the storage module 1101 is a memory, the first terminal in embodiments of this application may be a first terminal shown in FIG. 12.

Refer to FIG. 12. The first terminal 1200 includes a display 1201, one or more processors 1202, a transceiver 1203, a memory 1204, and a bus 1205. The transceiver 1203, the processor 1202, and the memory 1204 are connected to each other by using the bus 1205. The bus 1205 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 12, but it does not mean that there is only one bus or only one type of bus.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, the storage medium is coupled to the processor, so that the processor can read information from the storage medium and write information into the storage medium. Certainly, the storage medium may be a component of the processor. The processor and the storage medium may be located in an ASIC.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. An NFC payment method, wherein the method comprises:
issuing, by a second payment application, a second payment card, wherein the second payment application is a non-system-default payment application for NFC payment, and the payment card is a virtual card that has a capability to perform a payment transaction by using an NFC payment capability;
obtaining, by a first payment application, a second payment card snapshot of the second payment application, wherein the first payment application is set as a system-default payment application for NFC payment, and the second payment card snapshot comprises a link for jumping to a payment interface of the second payment card;
displaying the second payment card of the second payment application in an NFC payment interface of the first payment application in response to an operation of opening the NFC payment interface by a user;
displaying, by the first payment application, a payment interface of the second payment application based on the second payment card snapshot of the second payment application in response to an operation of selecting the second payment card of the second payment application by the user; and
interacting, by the second payment application, with a second terminal to complete payment.

2. The method according to claim 1, wherein the method further comprises:
issuing, by the first payment application, a first payment card.

3. The method according to claim 2, after the issuing, by the first payment application, a first payment card, further comprising:
displaying the first payment card in the NFC payment interface in response to the operation of opening the NFC payment interface of the first payment application by the user.

4. The method according to claim 1, wherein the obtaining, by a first payment application, the second payment card snapshot of the second payment application comprises:
sending, by the first payment application, a message for requesting to obtain the second payment card snapshot of the second payment application to the second payment application; and
sending, by the second payment application, the second payment card snapshot of the second payment application to the first payment application.

5. The method according to any one of claims 1 to 4, before the displaying, by the first payment application, a payment interface of the second payment application based on the second payment card snapshot of the second payment application, further comprising:
obtaining, by the first payment application, a status of a foreground payment application setting switch in an NFC payment setting of the first terminal, wherein the foreground payment application setting switch is used to control a function of prioritizing a foreground application to be enabled or disabled, and the function of prioritizing the foreground application is for using a payment application located in a current display interface as a preferred payment application; and
if the foreground payment application setting switch is not turned on, setting, by the first payment application, the foreground payment application setting switch to an on state.

6. The method according to any one of claims 1 to 5, after the displaying, by the first payment application, a payment interface of the second payment application based on the second payment card snapshot of the second payment application, further comprising:
interacting, by the second payment application, with the second terminal, and displaying prompt information indicating that a balance is insufficient;
displaying, by the second payment application, a recharge interface of the second payment application in response to an operation of choosing, by the user, to perform recharging; and
displaying, by the second payment application, a recharge completed interface in response to an operation of completing, by the user, recharging in the recharge interface of the second payment application.

7. The method according to claim 6, after the displaying, by the second payment application, a recharge completed interface, further comprising:
displaying, by the second payment application, the payment interface of the second payment application.

8. The method according to any one of claims 1 to 7, after the interacting, by the second payment application, with the second terminal to complete payment, further comprising:
closing, by the second payment application, the payment interface of the second payment application; and
displaying, by the first payment application, the second payment card in the NFC payment interface.

9. The method according to any one of claims 1 to 8, after the interacting, by the second payment application, with the second terminal to complete payment, further comprising:
providing, by the second payment application, the first payment application with a message indicating that a balance of the second payment card is insufficient; and
receiving, by the first payment application, the message indicating that the balance of the second payment card is insufficient, and displaying, in the NFC payment interface of the first payment application, information indicating that the balance of the second payment card is insufficient.

10. The method according to claim 9, wherein the second payment card snapshot further comprises a link for jumping to a recharge interface of the second payment card, and the method further comprises:
displaying, by the first payment application, the recharge interface of the second payment application based on the second payment card snapshot in response to an operation of choosing, by the user, to recharge the second payment card; and
displaying, by the second payment application, the recharge completed interface of the second payment application in response to an operation of completing, by the user, recharging in the recharge interface of the second payment application.

11. The method according to claim 10, after the displaying the recharge completed interface of the second payment application, further comprising:
closing, by the second payment application, the recharge completed interface of the second payment application; and
displaying, by the first payment application, the second payment card in the NFC payment interface.

12. A first terminal, comprising:
a memory, configured to store instructions executed by one or more processors of the first terminal;
a transceiver, configured to receive or send a radio signal; and
a processor, wherein when the processor executes the instructions in the memory, the first terminal may be enabled to perform the NFC payment method according to any one of claims 1 to 11.

13. A chip, wherein the chip system comprises a processing circuit and a storage medium, the storage medium stores computer program code, and when the computer program code is executed by the processing circuit, the method according to any one of claims 1 to 11 is implemented.

14. A computer-readable storage medium, wherein the computer-readable storage medium is configured to store a computer program, and when the computer program is run on a computer, the computer is enabled to perform the method according to any one of claims 1 to 11.
